# EUROPÄISCHE PATENTSCHRIFT

(11) **EP 1 401 891 B1**
(45) Veröffentlichungstag und Bekanntmachung des Hinweises auf die Patenterteilung: **16.01.2008**
(21) Anmeldenummer: 02732737.8
(22) Anmeldetag: 24.05.2002
(51) Int. Cl.: C08F 12/32, C09D 5/00

(54) **PULVERLACKSUSPENSIONEN (PULVERSLURRIES) UND PULVERLACKE, VERFAHREN ZU IHRER HERSTELLUNG UND IHRE VERWENDUNG**
POWDER COATING SUSPENSIONS (POWDER SLURRIES) AND POWDER COATINGS, METHOD FOR THE PRODUCTION AND USE THEREOF
SUSPENSIONS DE PEINTURES PULVERULENTES (SUSPENSIONS DE POUDRES) ET PEINTURES PULVERULENTES, LEUR PROCEDE DE PRODUCTION ET LEUR UTILISATION

(30) Priorität: 01.06.2001 DE 10126651
(43) Veröffentlichungstag der Anmeldung: 31.03.2004
(60) Teilanmeldung: 07021959.7
(73) Patentinhaber: BASF Coatings AG, 48165 Münster (DE)
(72) Erfinder: BREMSER, Wolfgang, 48165 Münster (DE); JUNG, Werner-Alfons, 59387 Ascheberg (DE); STANG, Michael, 67069 Ludwigshafen (DE); WOLF, Heiko, 67227 Frankenthal (DE)
(74) Vertreter: Leifert & Steffan
(86) Internationale Anmeldenummer: PCT/EP2002/005699
(87) Internationale Veröffentlichungsnummer: WO 2002/098932

(56) Entgegenhaltungen:
- DE-A- 19 652 813
- DE-A- 19 930 665

## Beschreibung

Die vorliegende Erfindung betrifft neue Pulverlacksuspensionen (Pulverslurries) und Pulverlacke, herstellbar durch ein Emulgierverfahren. Außerdem betrifft die vorliegende Erfindung ein Verfahren zur Herstellung neuer Pulverlacksuspensionen (Pulverslurries) und Pulverlacke durch Emulgierung. Außerdem betrifft die vorliegende Erfindung die Verwendung der neuen Pulverlacksuspensionen (Pulverslurries) und Pulverlacke als Beschichtungsstoffe, Klebstoffe und Dichtungsmassen für das Lackieren, Verkleben und Abdichten von Kraftfahrzeugkarosserien und Teilen hiervon, Kraftfahrzeugen im Innen- und Außenbereich, Bauwerken im Innen- und Außenbereich, Türen, Fenstern und Möbeln sowie für das Lackieren, Verkleben und Abdichten im Rahmen der industriellen Lackierung insbesondere von Kleinteilen, Coils, Container, Emballagen, elektrotechnischen Bauteilen und weißer Ware.

Pulverlacke in Form wäßriger Suspensionen, die im wesentlichen frei von organischen Lösemitteln sind und sich mit Flüssiglacktechnologien verarbeiten lassen, sowie Verfahren zu ihrer Herstellung durch Schmelzeemulgierung sind aus der deutschen Patentanmeldung DE 196 52 813 A1 bekannt. Bei diesem bekannten Verfahren werden die Bindemittel, die Vernetzungsmittel sowie gegebenenfalls weitere Zusatzstoffe oder Additive als viskose Harzschmelzen in die Dispergieraggregate eingespeist und dort in flüssiger Phase fein dispergiert. Die Bestandteile können aber auch vor ihrer Dispergierung in dem Dispergieraggregat im flüssigen Zustand zunächst homogen miteinander vermischt und dann in einen zweiten Schritt in flüssiger Phase fein dispergiert werden. Anschließend wird die resultierende Emulsion durch Abkühlen in eine Suspension mit festen, fein verteilten Partikeln überführt. Der wesentliche Vorteil dieses Verfahrens ist, daß auf aufwendige und die Dispersionen u. U. schädigende Mahlverfahren, mit denen die erforderliche Teilchengröße eingestellt werden muß, verzichtet werden kann. Außerdem können mit Hilfe der Schmelzeemulgierung feinteiligere Pulverlacksuspensionen hergestellt werden als nach den Mahlverfahren.

Die Isolierung der dispergierten bzw. suspendierten Pulverlackpartikel geht aus der deutschen Patentanmeldung nicht hervor.

Nach Spalte 7, Zeilen 4 bis 9, der DE 196 52 813 A1 können als Stabilisatoren, Dispergiermittel oder Emulgatoren kurzkettige amphiphile Polyacrylate, die aus Acrylsäure, Ethylhexylacrylat, Hydroxyethylacrylat und einem anionischen Comonomer in lyotroper Phase durch übertragende Polymerisation hergestellt werden, verwendet werden. Die Oberflächenspannung wäßriger Lösungen der Emulgatoren bei der kritischen Micellbildungskonzentration (KMK) wird indes nicht angegeben.

Pulverslurries, die durch Schmelzeemulgierung hergestellt werden, werden auch in den nicht vorveröffentlichten deutschen Patentanmeldungen DE 100 06 673.9 und DE 100 18 581.9 beschrieben. Die resultierenden dispergierten Pulverlackpartikel werden indes nicht isoliert und als Pulverlacke verwendet Als Emulgatoren werden nichtionische Emulgatoren wie alkoxylierte Alkanole und Polyole, Phenole und Alkylphenole oder anionische Emulgatoren wie Alkalisalze oder Ammoniumsalze von Alkancarbonsäuren, Alkansulfonsäuren, und Sulfonsäuren von alkoxylierten Alkanolen und Polyolen, Phenolen und Alkylphenole verwendet. Die Oberflächenspannung wäßriger Lösungen der Emulgatoren bei der kritischen Micellbildungskonzentration (KMK) wird indes nicht angegeben.

Verfahren zur Herstellung von Pulverslurries und Pulverlacken durch Schmelzeemulgierung sind aus der internationalen Patentanmeldung WO 97/45476 bekannt. Nach Seite 13, Zeilen 5 bis 20, der internationalen Patentanmeldung werden bei dem Verfahren Emulgatoren verwendet Im Falle einer wäßrigen Phase wird Polyethylenglykol oder Polyvinylalkohol verwendet Wesentlich ist, daß die Emulgatoren eine Ankerkomponente aufweisen, die die Emulgatoren mit der Schmelze durch physikalische Adsorption oder chemische Reaktion verknüpft. Beispiele geeigneter Ankerkomponenten sind polare (Meth)Acrylatcopolymerisate oder die entsprechenden Gruppen. Die Oberflächenspannung wäßriger Lösungen der Emulgatoren bei der kritischen Micellbildungskonzentration (KMK) wird indes nicht angegeben.

Verfahren zur Herstellung von Pulverslurries und Pulverlacken durch Schmelzeemulgierung sind außerdem aus der internationalen Patentanmeldung WO 98/45356 bekannt. Es werden ionische und nicht ionische Emulgatoren (Surfactants) verwendet. Als ionische Emulgatoren werden die in-situ-Umsetzungsprodukte der in dem Verfahren verwendeten carboxylgruppenhaltigen Olefincopolymerisate mit Ammoniumhydroxid, Triethanolamin, Morpholin und Dimethylethanolamin eingesetzt. Bevorzugte nicht ionische Emulgatoren sind Alkylphenolthioxylate und Ethylenoxid-Propylenglykol-Copolymere. Die Oberflächenspannung wäßriger Lösungen der Emulgatoren bei der kritischen Micellbildungskonzentration (KMK) wird indes nicht angegeben.

Die bisher bekannten Verfahren zur Herstellung von Pulverslurries und Pulverlacken durch Schmelzeemulgierung weisen den Nachteil auf, daß die angewandten Stabilisatoren, Dispergiermittel oder Emulgatoren entweder nur die zunächst entstehenden emulgierten geschmolzenen Partikel oder die nach der Abkühlung der Emulsion resultierenden suspendierten festen Partikel nicht aber beide zugleich in ausreichendem Maße stabilisieren. Bei den bekannten Verfahren besteht daher die Gefahr, daß sie auch auf geringfügige Variationen der Verfahrensbedingungen nachteilig reagieren und keine spezifikationsgerechten Pulverslurries und Pulverlacke liefern.

Die Verwendung von Dispersionen von Copolymerisaten, die durch ein- oder mehrstufige radikalische Copolymerisation von
a) mindestens einem olefinisch ungesättigten Monomer und
b) mindestens einem vom olefinisch ungesättigten Monomer (a) verschiedenen olefinisch ungesättigten Monomer der allgemeinen Formel I

   **R¹R²C=CR³R⁴** (I),

   worin die Reste R¹, R², R³ und R⁴ jeweils unabhängig voneinander für Wasserstoffatome oder substituierte oder unsubstituierte Alkyl-, Cycloalkyl-, Alkylcycloalkyl-, Cycloalkylalkyl-, Aryl-, Alkylaryl-, Cycloalkylaryl- Arylalkyl- oder Arylcycloalkylreste stehen, mit der Maßgabe, daß mindestens zwei der Variablen R¹, R², R³ und R⁴ für substituierte oder unsubstituierte Aryl-, Arylalkyl- oder Arylcycloalkylreste, insbesondere substituierte oder unsubstituierte Arylreste, stehen;
in wäßrigen Medien herstellbar sind, als Bindemittel in. Beschichtungsstoffen, insbesondere Wasserbasislacken (vgl. die deutsche Patentanmeldung DE 199 30 665 A1), Füllern und Steinschlagschutzgrundierungen (vgl. die deutsche Patentanmeldung DE 199 30 067 A1) und Klarlacken (vgl. die deutsche Patentanmeldung DE 199 30 664 A1), ist bekannt. Ihre Verwendung als Stabilisatoren, Emulgatoren oder Dispergiermittel wird in den Patentanmeldungen nicht beschrieben.

Aufgabe der vorliegenden Erfindung ist es, neue Pulverlacksuspensionen (Pulverslurries) und neue Pulverlacke, herstellbar durch ein Emulgierverfahren, zu finden, die sich in einfacher Weise zuverlässig und reproduzierbar herstellen lassen und die vorgegebenen Spezifikationen sicher erfüllen.

Außerdem ist es die Aufgabe der vorliegenden Erfindung, ein neues Verfahren zur Herstellung von Pulverlacksuspensionen (Pulverslurries) und Pulverlacken zu finden, das die Nachteile des Standes der Technik nicht mehr länger aufweist, sondern das in einfacher Weise zuverlässig und reproduzierbar spezfikationsgerechte Pulverslurries und Pulverlacke liefert.

Desweiteren ist es die Aufgabe der vorliegenden Erfindung, neue Stabilisatoren, Dispergiermittel oder Emulgatoren für Verfahren zur Herstellung von Pulverslurries und Pulverlacken durch Emulgierung bereitzustellen, die die zunächst entstehenden emulgierten flüssigen Partikel und die nach der Abkühlung der Emulsion resultierenden dimensionsstabilen Pulverlackpartikel beide zugleich in dem erforderlichen Maße stabilisieren.

Demgemäß wurde die neue Verwendung von Copolymerisaten, die durch ein- oder mehrstufige radikalische Copolymerisation von
(a) mindestens einem olefinisch ungesättigten Monomer und
(b) mindestens einem vom olefinisch ungesättigten Monomer (a) verschiedenen olefinisch ungesättigten Monomer der allgemeinen Formel I

   **R¹R²C=CR³R⁴** (I),

   worin die Reste R¹, R², R³ und R⁴ jeweils unabhängig voneinander für Wasserstoffatome oder substituierte oder unsubstituierte Alkyl-, Cycloalkyl-, Alkylcycloalkyl-, Cycloalkylalkyl-, Aryl-, Alkylaryl-, Cycloalkylaryl- Arylalkyl- oder Arylcycloalkylreste stehen, mit der Maßgabe, daß mindestens zwei der Variablen R¹, R², R³ und R⁴ für substituierte oder unsubstituierte Aryl-, Arylalkyl- oder Arylcycloalkylreste, insbesondere substituierte oder unsubstituierte Arylreste, stehen;
in einem wäßrigen Medium herstellbar sind, als Emulgatoren gefunden.

Außerdem wurden die neuen Pulverlacksuspensionen (Pulverslurries) und Pulverlacke gefunden, wobei die Pulverslurries herstellbar sind, indem man
(1) mindestens eine flüssige Komponente, enthaltend mindestens ein flüssiges Ausgangsprodukt, in einem wäßrigen Medium emulgiert, wodurch eine wäßrige Emulsion flüssiger Partikel resultiert,
(2) die Emulsion abkühlen läßt, so daß sich eine Suspension dimensionsstabiler Partikel bildet,
und wobei die Pulverlacke herstellbar sind, indem man
(1) mindestens eine flüssige Komponente, enthaltend mindestens ein flüssiges Ausgangsprodukt, in einem wäßrigen Medium emulgiert, wodurch eine wäßrige Emulsion flüssiger Partikel resultiert,
(2) die Emulsion abkühlen läßt, so daß sich eine Suspension dimensionsstabiler Partikel bildet, wonach man
(3) die dimensionsstabilen Partikel isoliert,
wobei man hierbei mindestens einen Emulgator verwendet, dessen wäßrige Lösung bei der kritischen Micellbildungskonzentration (KMK) eine Oberflächenspannung >30 mN/m hat.

Im folgenden werden die neuen Pulverslurries und Pulverlacke als "erfindungsgemäße Pulverslurries und Pulverlacke," bezeichnet.

Außerdem wurde das neue Verfahren zur Herstellung von Pulverlacksuspensionen (Pulverslurries) und Pulverlacken durch Emulgierung ihrer Bestandteile gefunden, wobei die Pulverslurries hergestellt werden, indem man
(1) mindestens eine flüssige Komponente, enthaltend mindestens ein flüssiges Ausgangsprodukt, in einem wäßrigen Medium emulgiert, wodurch eine wäßrige Emulsion flüssiger Partikel resultiert,
(2) die Emulsion abkühlen läßt, so daß sich eine Suspension dimensionsstabiler Partikel bildet,
   und wobei die Pulverlacke hergestellt werden, indem man

(1) mindestens eine flüssige Komponente, enthaltend ein flüssiges Ausgangsprodukt, In einem wäßrigen Medium emulgiert, wodurch eine wäßrige Emulsion flüssiger Partikel resultiert,
(2) die Emulsion abkühlen läßt, so daß sich eine Suspension dimensionsstabiler Partikel bildet, wonach man
(3) die dimensionsstabilen Partikel isoliert,
wobei man hierbei mindestens einen Emulgator verwendet, dessen wäßrige Lösung bei der kritischen Micellbildungskonzentration (KMK) eine Oberflächenspannung >30 mN/m hat.

Im folgenden wird das neue Verfahren zur Herstellung von Pulverslurries und Pulverlacken durch Schmelzeemulgierung als "erfindungsgemäßes Verfahren" verwendet.

Im Hinblick auf den Stand der Technik war es überraschend und für den Fachmann nicht vorhersehbar, daß die Aufgabe, die der vorliegenden Erfindung zugrundelag, mit Hilfe des erfindungsgemäßen Verfahrens und der erfindungsgemäßen Pulverslurries und Pulverlacke gelöst werden konnte. Noch mehr überraschte, daß gerade die bisher nur als Bindemittel eingesetzten Copolymerisate aus den Monomeren (a) und (b) die erforderlichen Eigenschaften aufwiesen, um für das erfindungsgemäße Verfahren in Betracht zu kommen.

Erfindungsgemäß wird für die Herstellung der erfindungsgemäßen Pulverslurries und Pulverlacke ein Emulgator verwendet, dessen wäßrige Lösung bei der kritischen Micellbildungskonzentration (KMK) eine Oberflächenspannung > 30, vorzugsweise > 35 und insbesondere > 40 mN/m hat.

Im Rahmen der vorliegenden Erfindung ist unter der kritischen Micellbildungskonzentration (KMK) die charakteristische Konzentration, bei der sich aus Tensid-Molekülen in wäßrigen Lösungen oberhalb einer bestimmten Temperatur (Krafft-Punkt) Micellen bilden, zu verstehen (vgl. Römpp-Chemie-Lexikon, Georg Thieme Verlag, Stuttgart, New York, 9. Auflage, 1991, Band 4, Seiten 2769 und 2770, »Micellen«).

Demgemäß kommen für die Herstellung der erfindungsgemäßen Pulverslurries und Pulverlacke alle ionischen und nichtionischen Emulgatoren in Betracht, die diese Voraussetzung erfüllen.

Besonders bevorzugt werden als erfindungsgemäß zu verwendende Emulgatoren Copolymerisate eingesetzt, die durch ein- oder mehrstufige, insbesondere einstufige, radikalische, insbesondere kontrollierte radikalische, Copolymerisation von
(a) mindestens einem olefinisch ungesättigten Monomer und
(b) mindestens einem vom olefinisch ungesättigten Monomer (a) verschiedenen olefinisch ungesättigten Monomer der allgemeinen Formel I

   **R¹R²C=CR³R⁴** (I),

   worin die Reste R¹, R², R³ und R⁴ jeweils unabhängig voneinander für Wasserstoffatome oder substituierte oder unsubstituierte Alkyl-, Cycloalkyl-, Alkylcycloalkyl-, Cycloalkylalkyl-, Aryl-, Alkylaryl-, Cycloalkylaryl- Arylalkyl- oder Arylcycloalkylreste stehen, mit der Maßgabe, daß mindestens zwei der Variablen R¹, R², R³ und R⁴ für substituierte oder unsubstituierte Aryl-, Arylalkyl- oder Arylcycloalkylreste, insbesondere substituierte oder unsubstituierte Arylreste, stehen;
in einem wäßrigen Medien herstellbar sind.

Beispiele geeigneter Monomere (a) sind
(a1) im wesentlichen säuregruppenfreien (Meth)acrylsäureester wie (Meth)Acrylsäurealkyl- oder -cycloalkylester mit bis zu 20 Kohlenstoffatomen im Alkylrest, insbesondere Methyl-, Ethyl-, Propyl-, n-Butyl-, sec.-Butyl-, tert.-Butyl-, Hexyl-, Ethylhexyl-, Stearyl- und Laurylacrylat oder -methacrylat; cycloaliphatische (Meth)acrylsäureester, insbesondere Cyclohexyl-, Isobornyl-, Dicyclopentadienyl-, Octahydro-4,7-methano-1H-inden-methanol- oder tert.-Butylcyclohexyl(meth)acrylat; (Meth)Acrylsäureoxaalkylester oder -oxacycloalkylester wie Ethyltriglykol(meth)acrylat und Methoxyoligoglykol(meth)acrylat mit einem Molekulargewicht Mn von vorzugsweise 550 oder andere ethoxylierte und/oder propoxylierte hydroxylgruppenfreie (Meth)acrylsäurederivate. Diese können in untergeordneten Mengen höherfunktionelle (Meth)Acrylsäurealkyl- oder - cycloalkylester wie Ethylengylkol-, Propylenglykol-, Diethylenglykol-, Dipropylenglykol-, Butylenglykol-, Pentan-1,5-diol-, Hexan-1,6-diol-, Octahydro-4,7-methano-1H-inden-dimethanol- oder Cyclohexan-1,2-, -1,3- oder -1,4-diol-di(meth)acrylat; Trimethylolpropan-di- oder -tri(meth)acrylat; oder Pentaerythrit-di-, -tri- oder-tetra(meth)acrylat enthalten. Im Rahmen der vorliegenden Erfindung sind hierbei unter untergeordneten Mengen an höherfunktionellen Monomeren solche Mengen zu verstehen, welche nicht zur Vernetzung oder Gelierung der Copolymerisate führen.
(a2) Monomere, welche mindestens eine Hydroxylgruppe, Aminogruppe, Alkoxymethylaminogruppe oder Iminogruppe pro Molekül tragen und im wesentlichen säuregruppenfrei sind, wie Hydroxyalkylester der Acrylsäure, Methacrylsäure oder einer anderen alpha,beta-olefinisch ungesättigten Carbonsäure, die sich von einem Alkylenglykol ableiten, das mit der Säure verestert ist, oder die durch Umsetzung der alpha,beta-olefinsich ungesättigten Carbonsäure mit einem Alkylenoxid erhältlich sind, insbesondere Hydroxyalkylester der Acrylsäure, Methacrylsäure, Ethacrylsäure, Crotonsäure, Maleinsäure, Fumarsäure oder Itaconsäure, in denen die Hydroxyalkylgruppe bis zu 20 Kohlenstoffatome enthält, wie 2-Hydroxyethyl-, 2-Hydroxypropyl-, 3-Hydroxypropyl-, 3-Hydroxybutyl-, 4-Hydroxybutylacrylat, -methacrylat, -ethacrylat, -crotonat,-maleinat, -fumarat oder -itaconat; oder Hydroxycycloalkylester wie 1,4-Bis(hydroxymethyl)cyclohexan-, Octahydro-4,7-methano-1H-inden-dimethanol- oder Methylpropandiolmonoacrylat, monomethacrylat, -monoethacrylat, -monocrotonat, -monomaleinat, -monofumarat oder -monoitaconat; oder Umsetzungsprodukte aus cyclischen Estern, wie z.B. epsilon-Caprolacton und diesen Hydroxyalkyl- oder -cycloalkylestern; oder olefinisch ungesättigte Alkohole wie Allylalkohol oder Polyole wie Trimethylolpropanmono- oder diallylether oder Pentaerythritmono-, -di- oder -triallylether (hinsichtlich dieser höherfunktionellen Monomeren (a2) gilt das für die höherfunktionellen Monomeren (a1) Gesagte sinngemäß); N,N-Dimethylaminoethylacrylat, N,N-Diethylaminoethylmethacrylat, Allylamin oder N-Methyliminoethylacrylat oder N,N-Di(methoxymethyl)aminoethylacrylat und -methacrylat oder N,N-Di(butoxymethyl)aminopropylacrylat und -methacrylat.
(a3) Monomere, welche mindestens eine Säuregruppe, die in die entsprechende Säureaniongruppe überführbar ist, pro Molekül tragen, wie Acrylsäure, beta-Carboxyethylacrylat, Methacrylsäure, Ethacrylsäure, Crotonsäure, Maleinsäure, Fumarsäure oder Itaconsäure; olefinisch ungesättigte Sulfon- oder Phosphonsäuren oder deren Teilester; oder Maleinsäuremono(meth)acryloyloxyethylester, Bemsteinsäuremono(meth)acryloyloxyethylester oder Phthalsäuremono(meth)acryloyfloxyethylester.
(a4) Vinylester von in alpha-Stellung verzweigten Monocarbonsäuren mit 5 bis 18 Kohlenstoffatomen im Molekül. Die verzweigten Monocarbonsäuren können erhalten werden durch Umsetzung von Ameisensäure oder Kohlenmonoxid und Wasser mit Olefinen in Anwesenheit eines flüssigen, stark sauren Katalysators; die Olefine können Crack-Produkte von paraffinischen Kohlenwasserstoffen, wie Mineralölfraktionen, sein und können sowohl verzweigte wie geradkettige acyclische und/oder cycloaliphatische Olefine enthalten. Bei der Umsetzung solcher Olefine mit Ameisensäure bzw. mit Kohlenmonoxid und Wasser entsteht ein Gemisch aus Carbonsäuren, bei denen die Carboxylgruppen vorwiegend an einem quaternäre Kohlenstoffatom sitzen. Andere olefinische Ausgangsstoffe sind z.B. Propylentrimer, Propylentetramer und Diisobutylen. Die Vinylester (a4) können aber auch auf an sich bekannte Weise aus den Säuren hergestellt werden, z.B. indem man die Säure mit Acetylen reagieren läßt. Besonders bevorzugt werden - wegen der guten Verfügbarkeit - Vinylester von gesättigten aliphatischen Monocarbonsäuren mit 9 bis 11 C-Atomen, die am alpha-C-Atom verzweigt sind, insbesondere aber Versatic®-Säuren, eingesetzt.
(a5) Umsetzungsprodukte aus Acrylsäure und/oder Methacrylsäure mit dem Glycidylester einer in alpha-Stellung verzweigten Monocarbonsäure mit 5 bis 18 C-Atomen je Molekül, insbesondere einer Versatic®-Säure, oder anstelle des Umsetzungsproduktes eine äquivalenten Menge Acryl- und/oder Methacrylsäure, die dann während oder nach der Polymerisationsreaktion mit dem Glycidylester einer in alpha-Stellung verzweigten Monocarbonsäure mit 5 bis 18 C-Atomen je Molekül, insbesondere einer Versatic®-Säure, umgesetzt wird.
(a6) Cyclische und/oder acyclische Olefine wie Ethylen, Propylen, But-1-en, Pent-1-en, Hex-1-en, Cyclohexen, Cyclopenten, Norbonen, Butadien, Isopren, Cylopentadien und/oder Dicyclopentadien.
(a7) (Meth)Acrylsäureamide wie (Meth)Acrylsäureamid, N-Methyl-, N,N-Dimethyl-, N-Ethyl-, N,N-Diethyl-, N-Propyl-, N,N-Dipropyl-, N-Butyl-, N,N-Dibutyl-, N-Cyclohexyl-, N,N-Cyclohexyl-methyl- und/oder N-Methylol-, N,N-Dimethylol-, N-Methoxymethyl-, N,N-Di(methoxymethyl)-, N-Ethoxymethyl- und/oder N,N-Di(ethoxyethyl)-(meth)acrylsäureamid. Monomere der letztgenannten Art werden vor allem für die Herstellung von selbstvemetzenden Bindemitteln (A) verwendet.
(a8) Epoxidgruppen enthaltende Monomere wie der Glycidylester der Acrylsäure, Methacrylsäure, Ethacrylsäure, Crotonsäure, Maleinsäure, Fumarsäure und/oder Itaconsäure.
(a9) Vinylaromatische Kohlenwasserstoffe wie Styrol, alpha-Alkylstyrole, insbesondere alpha-Methylstyrol, und/oder Vinyltoluol; Vinylbenzoesäure (alle Isomere), N,N-Diethylaminostyrol (alle Isomere), alpha-Methylvinylbenzoesäure (alle Isomere), N,N-Diethylamino-alpha-methylstyrol (alle Isomere) und/oder p-Vinylbenzsolsulfonsäure.
(a10) Nitrile wie Acrylnitril und/oder Methacrylnitril.
(a11) Vinylverbindungen, insbesondere Vinyl- und/oder Vinylidendihalogenide wie Vinylchlorid, Vinylfluorid, Vinylidendichlorid oder Vinylidendifluorid; N-Vinylamide wie Vinyl-N-methylformamid, N-Vinylcaprolactam, 1-Vinylimidazol oder N-Vinylpyrrolidon; Vinylether wie Ethylvinylether, n-Propylvinylether, Isopropylvinylether, n-Butylvinylether, Isobutylvinylether und/oder Vinylcyclohexylether; und/oder Vinylester wie Vinylacetat, Vinylpropionat, Vinylbutyrat, Vinylpivalat und/oder der Vinylester der 2-Methyl-2-ethylheptansäure.
(a12) Allylverbindungen, insbesondere Allylether und -ester wie Allylmethyl-, -ethyl-, -propyl- oder -butylether oder Allylacetat, - propionat oder -butyrat.
(a13) Polysiloxanmakromonomere, die ein zahlenmittleres Molekulargewicht Mn von 1.000 bis 40.000 und im Mittel 0,5 bis 2,5 ethylenisch ungesättigte Doppelbindungen pro Molekül aufweisen; insbesondere Polysiloxanmakromonomere, die ein zahlenmittleres Molekulargewicht Mn von 2.000 bis 20.000, besonders bevorzugt 2.500 bis 10.000 und insbesondere 3.000 bis 7.000 und im Mittel 0,5 bis 2,5, bevorzugt 0,5 bis 1,5, ethylenisch ungesättigte Doppelbindungen pro Molekül aufweisen, wie sie in der DE-A-38 07 571 auf den Seiten 5 bis 7, der DE-A 37 06 095 in den Spalten 3 bis 7, der EP-B-0 358 153 auf den Seiten 3 bis 6, in der US-A 4,754,014 in den Spalten 5 bis 9, in der DE-A 44 21 823 oder in der internationalen Patentanmeldung WO 92/22615 auf Seite 12, Zeile 18, bis Seite 18, Zeile 10, beschrieben sind.
   und/oder
(a14) Acryloxysilan-enthaltende Vinylmonomere, herstellbar durch Umsetzung hydroxyfunktioneller Silane mit Epichlorhydrin und anschließender Umsetzung des Reaktionsproduktes mit (Meth)acrylsäure und/oder Hydroxyalkyl- und/oder -cycloalkylestern der (Meth)Acrylsäure (vgl. Monomere a2).

Jedes der vorstehend genannten Monomeren (a1) bis (a14) kann für sich alleine mit dem Monomeren (b) polymerisiert werden. Erfindungsgemäß ist es indes von Vorteil, mindestens zwei Monomere (a), insbesondere mindestens ein Monomer (a1) und mindestens ein Monomer (a3), zu verwenden, weil hierdurch das Eigenschaftsprofil der resultierenden Copolymerisate in besonders vorteilhafter Weise sehr breit variiert und dem jeweiligen erfindungsgemäßen Verfahren ganz gezielt angepaßt werden kann. Insbesondere können in dieser Weise in die Copolymerisate reaktive funktionelle Gruppen eingebaut werden, durch die die Copolymerisate in die aus den erfindungsgemäßen Pulverslurries und Pulverlacken hergestellten Beschichtungen, Klebschichten und Dichtungen einvemetzt werden können.

Als Monomere (b) werden Verbindungen der allgemeinen Formel I verwendet

In der allgemeinen Formel I stehen die Reste R¹, R², R³ und R⁴ jeweils unabhängig voneinander für Wasserstoffatome oder substituierte oder unsubstituierte Alkyl-, Cycloalkyl-, Alkylcycloalkyl-, Cycloalkylalkyl-, Aryl-, Alkylaryl-, Cycloalkylaryl- Arylalkyl- oder Arylcycloalkylreste, mit der Maßgabe, daß mindestens zwei der Variablen R¹, R² , R³ und R⁴ für substituierte oder unsubstituierte Aryl-, Arylalkyl- oder Arylcycloalkylreste, insbesondere substituierte oder unsubstituierte Arylreste, stehen.

Beispiele geeigneter Alkylreste sind Methyl, Ethyl, Propyl, Isopropyl, n-Butyl, iso-Butyl, tert.-Butyl, Amyl, Hexyl oder 2-Ethylhexyl.

Beispiele geeigneter Cycloalkylreste sind Cyclobutyl, Cyclopentyl oder Cyclohexyl.

Beispiele geeigneter Alkylcycloalkylreste sind Methylencyclohexan, Ethylencyclohexan oder Propan-1,3-diyl-cyclohexan.

Beispiele geeigneter Cycloalkylalkylreste sind 2-, 3- oder 4-Methyl-, -Ethyl-, -Propyl- oder -Butylcyclohex-1-yl.

Beispiele geeigneter Arylreste sind Phenyl, Naphthyl oder Biphenylyl.

Beispiele geeigneter Alkylarylreste sind Benzyl oder Ethylen- oder Propan-1,3-diyl-benzol.

Beispiele geeigneter Cycloalkylarylreste sind 2-, 3-, oder 4-Phenylcyclohex-1-yl.

Beispiele geeigneter Arylalkylreste sind 2-, 3- oder 4-Methyl-, -Ethyl-, - Propyl- oder -Butylphen-1-yl.

Beispiele geeigneter Arylcycloalkylreste sind 2-, 3- oder 4-Cyclohexylphen-1-yl.

Die vorstehend beschriebenen Reste R¹, R², R³ und R⁴ können substituiert sein. Hierzu können elektronenziehende oder elektronenschiebende Atome oder organische Reste verwendet werden.

Beispiele geeigneter Substitutienten sind Halogenatome, insbesondere Chlor und Fluor, Nitrilgruppen, Nitrogruppen, partiell oder vollständig halogenierte, insbesondere chlorierte und/oder fluorierte, Alkyl-, Cycloalkyl-, Alkylcycloalkyl-, Cycloalkylalkyl-, Aryl-, Alkylaryl-, Cycloalkylaryl- Arylalkyl- und Arylcycloalkylreste, inclusive der vorstehend beispielhaft genannten, insbesondere tert.-Butyl; Aryloxy-, Alkyloxy- und Cycloalkyloxyreste, insbesondere Phenoxy, Naphthoxy, Methoxy, Ethoxy, Propoxy, Butyloxy oder Cyclohexyloxy; Arylthio-, Alkylthio- und Cycloalkylthioreste, insbesondere Phenylthio, Naphthylthio, Methylthio, Ethylthio, Propylthio, Butylthio oder Cyclohexylthio; Hydroxylgruppen; und/oder primäre, sekundäre und/oder tertiäre Aminogruppen, insbesondere Amino, N-Methylamino, N-Ethylamino, N-Propylamino, N-Phenylamino, N-Cyclohexylamino, N,N-Dimethylamino, N,N-Diethylamino, N,N-Dipropylamino, N,N-Diphenylamino, N,N-Dicyclohexylamino, N-Cyclohexyl-N-methylamino oder N-Ethyl-N-methylamino.

Beispiele für erfindungsgemäß besonders bevorzugt verwendete Monomere (b) sind Diphenylethylen, Dinaphthalinethylen, cis- oder trans-Stilben, Vinyliden-bis(4-N,N-dimethylaminobenzol), Vinyliden-bis(4-aminobenzol) oder Vinyliden-bis(4-nitrobenzol).

Erfindungsgemäß können die Monomeren (b) einzeln oder als Gemisch aus mindestens zwei Monomeren (b) verwendet werden.

Hinsichtlich der Reaktionsführung und der Eigenschaften der resultierenden Copolymerisate, insbesondere der Acrylatcopolymerisate, ist Diphenylethylen von ganz besonderem Vorteil und wird deshalb erfindungsgemäß ganz besonders bevorzugt verwendet.

Die erfindungsgemäß zu verwendenden Monomere (a) und (b) werden in Gegenwart mindestens eines radikalischen Initiators miteinander zu dem Copolymerisat umgesetzt. Als Beispiele für einsetzbare Initiatoren werden genannt Dialkylperoxide, wie Di-tert.-Butylperoxid oder Dicumylperoxid; Hydroperoxide, wie Cumolhydroperoxid oder tert.- Butylhydroperoxid; Perester, wie tert.-Butylperbenzoat, tert.-Butylperpivalat, tert.-Butylper-3,5,5-trimethyl- hexanoat oder tert.-Butylper-2-ethylhexanoat; Kalium-, Natrium- oder Ammoniumsperoxodisulfat; Azodinitrile wie Azobisisobutyronitril; C-C-spaltende Initiatoren wie Benzpinakolsllylether; oder eine Kombination eines nicht oxidierenden Initiators mit Wasserstoffperoxid.

Vorzugsweise werden vergleichsweise große Mengen an radikalischem Initiator zugegeben, wobei der Anteil des Initiators am Reaktionsgemisch, jeweils bezogen auf die Gesamtmenge der Monomeren (a) und des Initiators, besonders bevorzugt 0,5 bis 50 Gew.-%, ganz besonderes bevorzugt 1 bis 20 Gew.-% und insbesondere 2 bis 15 Gew.-% beträgt

Vorzugsweise beträgt das Gewichtsverhältnis von Initiator zu den Monomeren (b) 4 : 1 bis 1 : 4, besonders bevorzugt 3 : 1 bis 1 : 3 und insbesondere 2 : 1 bis 1 : 2. Weitere Vorteile resultieren wenn der Initiator innerhalb der angegebenen Grenzen im Überschuß eingesetzt wird.

Vorzugsweise wird die radikalische Copolymerisation in den nachstehend genannten Vorrichtungen, insbesondere Rührkesseln oder Taylorreaktoren, durchgeführt, wobei die Taylorreaktoren so ausgelegt werden, daß auf der gesamten Reaktorlänge die Bedingungen der Taytorströmung erfüllt sind, selbst wenn sich die kinematische Viskosität des Reaktionsmediums aufgrund der Copolymerisation stark ändert, insbesondere ansteigt.

Die Copolymerisation wird in einem wäßrigen Medium durchgeführt.

Das wäßrige Medium enthält im wesentlichen Wasser. Hierbei kann das wäßrige Medium in untergeordneten Mengen die nachstehend im Detail beschriebenen Zusatzstoffe und/oder organischen Lösemittel und/oder sonstige gelöste feste, flüssige oder gasförmige organische und/oder anorganische, nieder- und/oder hochmolekulare Stoffe enthalten, sofern diese nicht die Copolymerisation in negativer Weise beeinflussen oder gar hemmen. Im Rahmen der vorliegenden Erfindung ist unter dem Begriff "untergeordnete Menge" eine Menge zu verstehen, welche den wäßrigen Charakter des wäßrigen Mediums nicht aufhebt Bei dem wäßrigen Medium kann es sich aber auch um reines Wasser handeln.

Vorzugsweise wird die Copolymerisation in der Gegenwart mindestens einer Base durchgeführt. Besonders bevorzugt sind niedermolekulare Basen wie Natronlauge, Kalilauge, Ammoniak, Diethanolamin, Triethanolamin, Mono-, Di- und Triethylamin. und/oder Dimethylethanolamin, insbesondere Ammoniak und/oder Di- und/oder Triethanolamin.

Die Copolymerisation wird vorteilhafterweise bei Temperaturen oberhalb der Raumtemperatur und unterhalb der niedrigsten Zersetzungstemperatur der jeweils verwendeten Monomeren durchgeführt, wobei bevorzugt ein Temperaturbereich von 10 bis 150°C, ganz besonders bevorzugt 70 bis 120 °C und insbesondere 80 bis 110 °C gewählt wird.

Bei Verwendung besonders leicht flüchtiger Monomeren (a) und/oder (b) kann die Copolymerisation auch unter Druck, vorzugsweise unter 1,5 bis 3.000 bar, bevorzugt 5 bis 1.500 und insbesondere 10 bis 1.000 bar mit durchgeführt werden.

Hinsichtlich der Molekulargewichtsverteilungen ist das Copolymerisat keinerlei Beschränkungen unterworfen. Vorteilhafterweise wird aber die Copolymerisation so geführt, daß eine Molekulargewichtsverteilung Mw/Mn gemessen mit Gelpermeationschromatographie unter Verwendung von Polystyrol als Standard von ≤ 4, vorzugsweise sonders bevorzugt ≤ 2 und insbesondere ≤ 1,5 sowie in einzelnen Fällen auch ≤ 1,3 resultiert. Die Molekulargewichte der Bestandteile (A) sind durch die Wahl des Verhältnisses von Monomer (a) zu Monomer (b) zu radikalischem Initiator in weiten Grenzen steuerbar. Dabei bestimmt insbesondere der Gehalt an Monomer (b) das Molekulargewicht, und zwar derart, daß je größer der Anteil an Monomer (b) ist, desto geringer ist das erhaltene Molekulargewicht.

Der durch die Copolymerisation resultierende Copolymerisat fällt als Gemisch mit dem wäßrigen Medium in der Regel in der Form einer Dispersion an. Es kann in dieser Form direkt als Emulgator eingesetzt oder auch als Feststoff isoliert und dann der Verwendung zugeführt werden.

Dabei kann der Emulgator, insbesondere als Feststoff, in die flüssigen Ausgangsprodukte und/oder, Insbesondere als Dispersion, in die wäßrigen Medien eingetragen werden. Vorzugsweise wird er in Form einer Dispersion in die wäßrigen Medien eingetragen.

In einer besonders bevorzugten Ausführungsform des erfindungsgemäßen Verfahrens, die vor allem bei der Herstellung von pigmentierten erfindungsgemäßen Pulverslurries und Pulverlacken angewandt wird, wird der erfindungsgemäß zu verwendende Emulgator über mindestens eine der nachstehend beschriebenen Pigmentpasten oder Pigmentpräparationen in die wäßrigen Medien eingetragen. Oder aber die betreffenden Pigmentpasten oder Pigmentpräparationen bilden das wäßrige Medium.

Die Menge der erfindungsgemäß zu verwendenden Emulgatoren, die bei dem erfindungsgemäßen Verfahren eingesetzt wird, kann stark variieren und richtet sich nach den Erfordernissen des Einzelfalls. So können sie in den vom Stand der Technik her bekannten, für Emulgatoren üblichen Mengen verwendet werden. Vorzugsweise werden sie in einer Menge von 0,01 bis 5,0, bevorzugt 0,02 bis 4,5, besonders bevorzugt 0,03 bis 4, ganz besonders bevorzugt 0,04 bis 3,5 und insbesondere 0,05 bis 3 Gew.-%, jeweils bezogen auf die Menge der geschmolzenen oder festen Partikel und der erfindungsgemäß zu verwendenden Emulgatoren, eingesetzt.

Die bei dem erfindungsgemäßen Verfahren eingesetzten Ausgangsprodukte werden im Hinblick auf die gewünschte Zusammensetzung und den Mechanismus der Härtung der erfindungsgemäßen Pulverslurry und Pulverlacke ausgewählt.

Die erfindungsgemäßen Pulverslurries und Pulverlacke können physikalisch härtend sein.

Im Rahmen der vorliegenden Erfindung bedeutet der Begriff "physikalische Härtung" die Härtung einer Schicht aus Partikeln der erfindungsgemäßen Pulverslurry oder des Pulverlacks durch Verfilmung, wobei die Verknüpfung innerhalb der Beschichtung über Schlaufenbildung der Polymermoleküle der Bindemittel (zu dem Begriff vgl. Römpp Lexikon Lacke und Druckfarben, Georg Thieme Verlag, Stuttgart, New York, 1998, »Bindemittel«, Seiten 73 und 74) erfolgt. Oder aber die Verfilmung erfolgt über die Koaleszenz von Bindemittelteilchen (vgl. Römpp Lexikon Lacke und Druckfarben, Georg Thieme Verlag, Stuttgart, New York, 1998, »Härtung«, Seiten 274 und 275). Üblicherweise sind hierfür keine Vernetzungsmittel notwendig. Gegebenenfalls kann die physikalische Härtung durch Luftsauerstoff, Hitze oder durch Bestrahlen mit aktinischer Strahlung unterstützt werden.

Die erfindungsgemäßen Pulverslurries und Pulverlacke können thermisch härtbar sein. Hierbei können sie selbstvernetzend oder fremdvemetzend sein.

Im Rahmen der vorliegenden Erfindung bezeichnet der Begriff "selbstvernetzend" die Eigenschaft eines Bindemittels mit sich selbst Vernetzungsreaktionen einzugehen. Voraussetzung hierfür ist, daß in den Bindemitteln bereits beide Arten von komplementären reaktiven funktionellen Gruppen enthalten sind, die für eine Vernetzung notwendig sind. Als fremdvemetzend werden dagegen solche Beschichtungsstoffe, bezeichnet, worin die eine Art der komplementären reaktiven funktionellen Gruppen in dem Bindemittel und die andere Art in einem Härter oder Vernetzungsmittel vorliegen. Ergänzend wird hierzu auf Römpp Lexikon Lacke und Druckfarben, Georg Thieme Verlag, Stuttgart, New York, 1998, »Härtung«, Seiten 274 bis 276, insbesondere Seite 275, unten, verwiesen.

Die erfindungsgemäßen Pulverslurries und Pulverlacke können mit aktinischer Strahlung härtbar sein.

Hierbei erfolgt die Härtung über Gruppen, die Bindungen enthalten, die mit aktinischer Strahlung aktivierbar sind. Im Rahmen der vorliegenden Erfindung ist unter aktinischer Strahlung elektromagnetische Strahlung, wie sichtbares Licht, UV-Strahlung oder Röntgenstrahlung, insbesondere UV-Strahlung, und Korpuskularstrahlung wie Elektronenstrahlung zu verstehen.

Die erfindungsgemäßen Pulverslurries und Pulverlacke können thermisch und mit aktinischer Strahlung härtbar sein.

Werden die thermische und die Härtung mit aktinischem Licht bei einer Pulverslurry oder Pulverlack gemeinsam angewandt, spricht man auch von "Dual Cure" und " Dual-Cure-Pulverslurry" und "Dual-Cure-Pulverlack".

Die erfindungsgemäßen Pulverslurries und Pulverlacke sind vorzugsweise Einkomponenten(1K)-Systeme.

Im Rahmen der vorliegenden Erfindung sind unter Einkomponenten(1K)-Systemen thermisch oder thermisch und mit aktinischer Strahlung härtende Pulverslurries und Pulverlacke zu verstehen, bei denen das Bindemittel und das Vernetzungsmittel nebeneinander in den suspendierten Partikeln vorliegen. Voraussetzung hierfür ist, daß die beiden Bestandteile erst bei höheren Temperaturen und/oder bei Bestrahlen mit aktinischer Strahlung miteinander vernetzen.

Der Gehalt der erfindungsgemäßen Pulverslurries an dimensionsstabilen Partikeln kann sehr breit variieren und richtet sich nach den Erfordernissen des Einzelfalls. Vorzugsweise liegt er bei 5,0 bis 60, bevorzugt 10 bis 55, besonders bevorzugt 15 bis 50, ganz besonders bevorzugt 20 bis 45 und insbesondere 25 bis 40 Gew.-%, jeweils bezogen auf die Gesamtmenge der erfindungsgemäßen Pulverslurry.

Ebenso kann die mittlere Teilchengröße der dimensionsstabilen Partikel der erfindungsgemäßen Pulverslurries breit variieren. Vorzugsweise liegt sie zwischen 0,1 und 100, bevorzugt 0,2 und 80, besonders bevorzugt 0,3 und 60, ganz besonders bevorzugt 0,4 und 40 und insbesondere 0,5 bis 20 µm. Für ganz besonders anspruchsvolle Verwendungszwecke wie die Kraftfahrzeugerstlackierung sind Partikelgrößen von 1 bis 10 µm von ganz besonderem Vorteil.

Auch die Größe der dimensionsstabilen Partikel der erfindungsgemäßen Pulverlacke kann breit variieren. Vorzugsweise liegt sie zwischen 5 und 500, bevorzugt zwischen 5 und 400, besonders bevorzugt zwischen 5 und 300, ganz besonders bevorzugt 10 und 200 insbesondere 10 und 100 µm.

Die mittlere Teilchengröße liegt vorzugsweise bei 10 bis 300, bevorzugt 10 bis 200, besonders bevorzugt 10 bis 150, ganz besonders bevorzugt 10 bis 100 und insbesondere 10 bis 50 µm. Dabei kann die Teilchengrößenverteilung eng oder breit sein. In den meisten Fällen ist eine enge Teilchengrößenverteilung, wie sie in den Patentanmeldungen und Literaturstellen EP 0 687 714 A1, DE 42 04 266 A1, DE 40 38 681 A1, P. G. de Lange und P. Selier, »Korngrößenverteilung und Eigenschaften von elektrostatischen Spritzpulvern (1) - Fraktionierung des Pulvers und Charakterisierung der Fraktionen«, Farbe und Lack, 79. Jahrgang, Nr. 5, 1973, Seiten 403 bis 412, P. G. de Lange und P. Selier, »Korngrößenverteilung und Eigenschaften von elektrostatischen Spritzpulvern (2) - Verhalten der Pulverfraktionen beim Spritzen und nach dem Einbrennen«, Farbe und Lack, 79. Jahrgang, Nr. 6, 1973, Seiten 509 bis 517, und EP 0 536 791 A1 beschrieben werden, von Vorteil.

Im Rahmen der vorliegenden Erfindung bedeutet "dimensionsstabil", daß die Partikel unter den üblichen und bekannten Bedingungen der Lagerung und der Anwendung von Pulverlacken oder Pulverlacksuspensionen, wenn überhaupt, nur geringfügig agglomerieren und/oder in kleinere Teilchen zerfallen, sondern auch unter dem Einfluß von Scherkräften im wesentlichen ihre ursprünglichen Form bewahren. Dabei können die Partikel hochviskos und/oder fest sein. Vorzugsweise sind die dimensionsstabilen Partikel fest.

Die erfindungsgemäßen Pulverslurries und Pulverlacke sind vorzugsweise frei von flüchtigen organischen Verbindungen (Volatile Organic Compounds, VOC), insbesondere von organischen Lösemitteln (Cosolventien). Im Rahmen der vorliegenden Erfindung bedeutet dies, daß sie einen Restgehalt an VOC von < 1 Gew.-%, bevorzugt < 0,5 Gew.-% und besonders bevorzugt < 0,2 Gew.-% haben. Erfindungsgemäß ist es von ganz besonderem Vorteil, wenn der Restgehalt unterhalb der gaschromätographischen Nachweisgrenze liegt.

Das erfindungsgemäße Verfahren geht aus von der Herstellung mindestens einer flüssigen Komponente, die mindestens ein flüssiges Ausgangsprodukt der erfindungsgemäßen Pulverslurries und Pulverlacke enthält. Dabei kann das Ausgangsprodukt bei Raumtemperatur bereits flüssig sein oder erst bei höheren Temperaturen schmelzen. Wesentlich ist, daß das Ausgangsprodukt bei den angewandten Prozeßtemperaturen flüssig ist. Vorzugsweise ist das Ausgangsprodukt bei Raumtemperatur fest. Insbesondere handelt es sich bei diesem Ausgangsprodukt um mindestens ein Bindemittel.

Die Herstellung der flüssigen Komponenten bietet keine methodischen Besonderheiten, sondern erfolgt mit Hilfe der üblichen und bekannten Verfahren und Vorrichtungen zur Herstellung von Schmelzen, insbesondere von Polymerschmelzen, wie Extruder, Rührkessel, Tayloreaktoren, Rohrreaktoren, Schlaufenreaktoren etc., wie sie beispielsweise in den eingangs genannten Patentanmeldungen beschrieben werden.

Die Prozeßtemperaturen werden so gewählt, daß die Zersetzungstemperatur des Ausgangsprodukts, das sich am leichtesten zersetzt, nicht überschritten wird. Vorzugsweise werden Prozeßtemperaturen von 50 bis 250, bevorzugt 60 bis 220, besonders bevorzugt 70 bis 200, ganz besonders bevorzugt 80 bis 190 und insbesondere 90 bis 180 °C angewandt.

Im Rahmen des erfindungsgemäßen Verfahrens wird die flüssige Komponente oder werden die flüssigen Komponenten anschließend geeigneten Mischaggregaten zugeführt, worin sie in einem wäßrigen Medium emulgiert werden. Vorzugsweise enthält das wäßrige Medium die vorstehend beschriebenen erfindungsgemäß zu verwendenden Emulgatoren.

In einer weiteren Variante des erfindungsgemäßen Verfahrens werden mindestens zwei flüssigen Komponenten, die jeweils mindestens ein flüssiges Ausgangsprodukt enthalten, zunächst einem üblichen und bekannten statischen Mischer zugeführt und homogenisiert Beispiele geeigneter Mischer sind solche vom Typ Sulzer, die von der Firma Sulzer Chemtech GmbH vertrieben werden. Die vereinigten Schmelzen werden anschließend dem Mischaggregat zugeführt

Vorzugsweise haben die flüssigen Komponenten jeweils so hohe Prozeßtemperaturen, daß bei dem Mischungsvorgang nicht die eine flüssige Komponente durch die andere soweit abgekühlt wird, daß sich feste Agglomerate bilden. Andererseits dürfen die Prozeßtemperaturen der flüssigen Komponenten nicht so hoch gewählt werden, daß die eine flüssige Komponente durch die andere soweit erhitzt wird, daß es beispielsweise zu Zersetzungsreaktionen kommt Besonders bevorzugt haben die flüssigen Komponenten bei dem Mischungsvorgang dieselbe oder in etwa dieselbe Prozeßtemperatur.

Mischaggregate, die für die Emulgierung von flüssigen Komponenten in wäßrigen Medien geeignet sind, sind üblich und bekannt Beispiele geeigneter Mischaggregate sind Inllne-Dissolver mit einem Rotor-Stator-Aufbau, vorzugsweise Zahnkranz-Dispergieraggregate insbesondere mit mindestens einer zylindrischen Anordnung mindestens zweier auf Haltern sitzender, sich umschließender, relativ zueinander gegenläufig rotierbarer Zerkleinerungsorgankränze (Stator und Rotor) auf, wobei der sich durch die Relativbewegung zwischen dem Stator und Rotor ergebende Arbeitspalt Wände aufweist, die nicht-parallel zueinander verlaufen. Dabei ist es von Vorteil, wenn der Rotor im Sinne eines sich öffnenden Arbeitspaltes rotiert. Beispiele gut geeigneter Zahnkranz-Dispergieraggregate werden in der Patentschrift EP 0 648 537 A1 im Detail beschrieben. Sie werden unter dem Handelsnamen "K-Generatoren" von der Firma Kinematica AG, Luzem, Schweiz, vertrieben.

Nach der Emulgierung werden die resultierenden emulgierten flüssigen Partikel abgekühlt, wodurch suspendierte dimensionsstabilen Partikel resultieren.

Für die Herstellung der erfindungsgemäßen Pulverslurry wird vorzugsweise mindestens ein Bindemittel aufgeschmolzen und im flüssigen Zustand einem Zahnkranz-Dispergieraggregat zugeführt, worin es in dem wäßrigen Medium emulgiert wird.

Die Temperatur der Schmelze(n) kann sehr breit variieren und richtet sich nach der stofflichen Zusammensetzung der Bindemittel. Im allgemeinen werden Temperaturen angewandt, bei denen die Bindemittel nicht thermisch geschädigt werden. Vorzugsweise werden Temperaturen von 110 bis 200, bevorzugt 115 bis 180 und insbesondere 120 bis 160 °C angewandt Dabei ist darauf zu achten, daß die Bindemittelschmelzen im Verlauf des erfindungsgemäßen Verfahrens wieder möglichst rasch abgekühlt werden, um die Gefahr der thermischen Schädigung möglichst gering zu halten. Der Fachmann kann daher das für den jeweiligen Einzelfall geeignete Temperatur-Zeit-Fenster aufgrund seines allgemeinen Fachwissens gegebenenfalls unter Zuhilfenahme orientierender Versuche in einfacher Weise bestimmen.

Wird zusätzlich mindestens ein flüssiges Vernetzungsmittel und/oder mindestens ein flüssiger Zusatzstoff zur Herstellung der erfindungsgemäßen Pulverslurry angewandt, werden alle Ausgangsprodukte getrennt voneinander verflüssigt oder aufgeschmolzen und dem Zahnkranz-Dispergieraggregat zugeführt, worin sie in dem wäßrigen Medium emulgiert werden.

Hinsichtlich des hierbei angewandten Temperatur-Zeit-Fensters gilt das vorstehend Gesagte sinngemäß, wobei als weitere Rahmenbedingung hinzutritt, daß die vorzeitige Reaktion der Bindemittel mit den Vernetzungsmitteln vermieden werden muß.

Nach dem Dispergieren wird die Emulsion rasch abgekühlt, so daß sich eine Suspension bildet. Hierbei werden vorzugsweise die in der DE 196 52 813 A1, Spalte 8, Zeilen 9 bis 17, beschriebenen Methoden angewandt

Durch die Abkühlung werden die flüssigen Partikel dimensionsstabilen, wodurch eine Suspension resultiert. Gegebenenfalls wird die Suspension oder die erfindungsgemäße Pulverslurry noch in einer geeigneten Vorrichtung, wie eine Rührwerksmühle oder eine Labormühle, naßvermahlen und vor ihrer Applikationen filtriert. Hierfür werden die üblichen und bekannten Filtrationsvorrichtungen und Filter verwendet, wie sie auch für die Filtration von bekannten Pulverslurries in Betracht kommen. Die Maschenweite der Filter kann breit variieren und richtet sich in erster Linie nach der Teilchengröße und der Teilchengroßenverteilung der Partikel der Suspension. Der Fachmann kann daher die geeigneten Filter leicht anhand dieses physikalischen Parameters ermitteln. Beispiele geeigneter Filter sind Beutelfilter. Diese sind am Markt unter den Marken Pong® oder Cuno® erhältlich. Vorzugsweise werden Beutelfilter mit den Maschenweiten 10 bis 50 µm verwendet, beispielsweise Pong® 10 bis Pong® 50.

Zur Herstellung der erfindungsgemäßen Pulverlacke werden die suspendierten dimensionsstabilen Partikel isoliert. Methodisch gesehen weist die Isolierung keine Besonderheiten auf sondern erfolgt mit Hilfe der üblichen und bekannten Vorrichtungen und Verfahren, wie sie beispielsweise bei der Filtration, der Sprühtrocknung oder der Gefriertrocknung angewandt werden. Gut geeignet sind Trocknungsverfahren, bei denen Rotationszerstäuber, Druckzerstäuber oder pneumatische Zerstäuber angewandt werden, wie sie in der internationalen Patentanmeldung WO 99/01499, Seite 5, Seite 24, bis Seite 7, Zeile 27, und Seite 27, Zeile 16, bis Seite 28, Zeile 19, beschrieben werden.

Im Falle der Herstellung erfindungsgemäßer Pulverslurries und Pulverlacke, die mit aktinischer Strahlung vernetzt werden können, ist es von Vorteil, unter Ausschluß aktinischer Strahlung zu arbeiten.

Die emulgierten flüssigen und die suspendierten dimensionsstabilen Partikel enthalten mindestens ein Bindemittel oder bestehen aus diesem.

Das Bindemittel kann für sich selbst gesehen, physikalisch, thermisch, mit aktinischer Strahlung und thermisch und mit aktinischer Strahlung härtbar sein. Im allgemein ist es in den Partikeln in einer Menge von 5,0 bis 100, vorzugsweise 6,0 bis 95, bevorzugt 7,0 bis 90, besonders bevorzugt 8,0 bis 85, ganz besonders bevorzugt 9,0 bis 80 und insbesondere 10 bis 80 Gew.-%, jeweils bezogen auf die Gesamtmenge der Partikel, enthalten.

Vorzugsweise weist das Bindemittel eine Glasübergangstemperatur oberhalb der Raumtemperatur, bevorzugt von 30 bis 80, besonders bevorzugt von 40 bis 70, ganz besonders bevorzugt von 40 bis 60 und insbesondere etwa 50°C auf (gemessen mit Hilfe der Differential Scanning Calorimetrie (DSC)).

Das Molekulargewicht des Bindemittels kann sehr breit variieren. Erfindungsgemäß ist es bevorzugt, das Molekulargewicht des Bindemittels nicht allzu hoch zu wählen, weil ansonsten Probleme bei der Verfilmung auftreten können. Vorzugsweise liegt das Molekulargewicht bei 500 bis 30.000, bevorzugt 500 bis 25.000, besonders bevorzugt 500 bis 20.000, ganz besonders bevorzugt 500 bis 15.000 und insbesondere 500 bis 10.000.

Die Bindemittel sind oligomere und polymere Harze. Unter Oligomeren werden Harze verstanden, die mindestens 2 bis 15 Monomereinheiten in ihrem Molekül enthalten. Im Rahmen der vorliegenden Erfindung werden unter Polymeren Harze verstanden, die mindestens 10 wiederkehrende Monomereinheiten in ihrem Molekül enthalten. Ergänzend wird zu diesen Begriffen auf Römpp Lexikon Lacke und Druckfarben, Georg Thieme Verlag, Stuttgart, New York, 1998, »Oligomere«, Seite 425, verwiesen.

Es ist von Vorteil, wenn die Mindestfilmbildetemperatur der Bindemittel im Bereich ihrer Glasübergangstemperatur Tg liegt und insbesondere mindestens 25 °C beträgt. Die Mindestfilmbildetemperatur kann ermittelt werden, indem die wäßrige Dispersion des Bindemittels mittels einer Rakel auf eine Glasplatte aufgezogen und auf einem Gradientenofen erwärmt wird. Die Temperatur, bei der die pulverförmige Schicht verfilmt, wird als Mindestfilmbildetemperatur bezeichnet Ergänzend wird auf Römpp Lexikon Lacke und Druckfarben, Georg Thieme Verlag, Stuttgart, New York, 1998 »Mindestfilmbildetemperatur«, Seite 391, verwiesen.

Beispiele für geeignete Bindemittel sind statistisch, alternierend und/oder blockartig aufgebaute lineare und/oder verzweigte und/oder kammartig aufgebaute (Co)Polymerisate von ethylenisch ungesättigten Monomeren, oder Polyadditionsharze und/oder Polykondensationsharze. Zu diesen Begriffen wird ergänzend auf Römpp Lexikon Lacke und Druckfarben, Georg Thieme Verlag, Stuttgart, New York, 1998, Seite 457, »Polyaddition« und »Polyadditionsharze (Polyaddukte)«, sowie Seiten 463 und 464, »Polykondensate«, »Polykondensation« und »Polykondensationsharze«, sowie Seiten 73 und 74, Bindemittel,", verwiesen.

Beispiele geeigneter (Co)Polymerisate sind (Meth)Acrylat(co)polymerisate oder partiell verseifte Polyvinylester, insbesondere (Meth)Acrylatcopolymerisate.

Beispiele geeigneter Polyadditionsharze und/oder Polykondensationsharze sind Polyester, Alkyde, Polyurethane, Polylactone, Polycarbonate, Polyether, Epoxidharz-Amin-Addukte, Polyharnstoffe, Polyamide, Polyimide, Polyester-Polyurethane, Polyether-Polyurethane oder Polyester-Polyether-Polyurethane, insbesondere Polyester-Polyurethane.

Von diesen Bindemitteln weisen die (Meth)Acrylat(co)polymerisate besondere Vorteile auf und werden deshalb besonders bevorzugt verwendet.

Die - selbstvemetzenden Bindemittel der thermisch härtbaren erfindungsgemäßen Pulverslurries und Pulverlacken enthalten reaktive funktionelle Gruppen, die mit Gruppen ihrer Art oder mit komplementären reaktiven funktionellen Gruppen Vernetzungsreaktionen eingehen können.

Die fremdvernetzenden Bindemittel enthalten reaktive funktionelle Gruppen, die mit komplementären reaktiven funktionellen Gruppen, die in Vernetzungsmitteln vorliegen, Vernetzungsreaktionen eingehen können.

Beispiele geeigneter erfindungsgemäß zu verwendender komplementärer reaktiver funktioneller Gruppen sind in der folgenden Übersicht zusammengestellt. In der Übersicht steht die Variable R für einen acyclischen oder cyclischen aliphatischen, einen aromatischen und/oder einen aromatisch-aliphatischen (araliphatischen) Rest; die Variablen R' und R" stehen für gleiche oder verschiedene aliphatische Reste oder sind miteinander zu einem aliphatischen oder heteroaliphatischen Ring verknüpft.

### Übersicht: Beispiele komplementärer funktioneller Gruppen

| **Bindemittel und Vernetzungsmittel** | |
|---|---|
| **oder** | |
| **Vernetzungsmittel und Bindemittel** | |
| -SH | -C(O)-OH |
| | |
| -NH₂ | -C(O)-O-C(O)- |
| | |
| -OH | -NCO |
| | |
| -O-(CO)-NH-(CO)-NH₂ | -NH-C(O)-OR |
| | |
| -O-(CO)-NH₂ | -CH₂-OH |
| | |
| >NH | -CH₂-O-R |
| | |
| | -NH-CH₂-O-R |
| | |
| | -NH-CH₂-OH |
| | |
| | -N(-CH₂-O-R)₂ |
| | |
| | -NH-C(O)-CH(-C(O)OR)₂ |
| | |
| | -NH-C(O)-CH(-C(O)OR)(-C(O)-R) |
| | |
| | -NH-C(O)-NR'R" |
| | |
| | > Si(OR)₂ |
| | |
| | 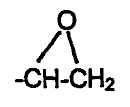 |
| | |
| | 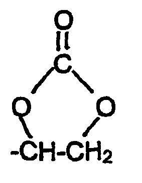 |
| -C(O)-OH | 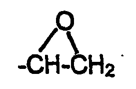 |
| | |
| | -C(O)-N(CH₂-CH₂-OH)₂ |

Die Auswahl der jeweiligen komplementären Gruppen richtet sich zum einen danach, daß sie bei der Herstellung, der Lagerung, der Applikation und dem Aufschmelzen der erfindungsgemäßen Pulverslurries und Pulverlacke keine unerwünschten Reaktionen, insbesondere keine vorzeitige Vernetzung, eingehen und/oder gegebenenfalls die Härtung mit aktinischer Strahlung nicht stören oder inhibieren dürfen, und zum anderen danach, in welchem Temperaturbereich die Vernetzung stattfinden soll.

Vorzugsweise werden bei den erfindungsgemäßen Pulverslurries und Pulverlacken Vemetzungstemperaturen von 60 bis 180°C angewandt Es werden daher vorzugsweise Bindemittel mit Thio-, Hydroxyl-, N-Methylolamino- N-Alkoxymethylamino-, Imino-, Carbamat-, Allophanat- und/oder Carboxylgruppen, bevorzugt Hydroxyl- oder Carboxylgruppen, einerseits und vorzugsweise Vernetzungsmittel mit Anhydrid-, Carboxyl-, Epoxy-, blockierten Isocyanat-, Urethan-, Methylol-, Methylolether-, Siloxan-, Carbonat-, Amino-, Hydroxy- und/oder beta-Hydroxyalkylamidgruppen, bevorzugt Epoxy-, beta-Hydroxyalkylamid-, blockierte Isocyanat-, Urethan- oder Alkoxymethylaminogruppen, andererseits angewandt

Im Falle selbstvernetzender erfindungsgemäßer Pulverslurries und Pulverlacke enthalten die Bindemittel insbesondere Methylol-, Methylolether und/oder N-Alkoxymethylaminogruppen.

Komplementäre reaktive funktionelle Gruppen, die für die Verwendung in den erfindungsgemäßen Pulverslurries und Pulverlacken besonders gut geeignet sind, sind
- Carboxylgruppen einerseits und Epoxidgruppen und/oder beta-Hydroxyalkylamidgruppen andererseits sowie
- Hydroxylgruppen einerseits und blockierte Isocyanat-, Urethan- oder Alkoxymethylaminogruppen andererseits.

Die Funktionalität der Bindemittel bezüglich der vorstehend beschriebenen reaktiven funktionellen Gruppen kann sehr breit variieren und richtet sich insbesondere nach der Vernetzungsdichte, die man erzielen will, und/oder nach der Funktionalität der jeweils angewandten Vernetzungsmittel. Beispielsweise liegt im Falle carboxylgruppenhaltiger Bindemittel die Säurezahl vorzugsweise bei 10 bis 100, bevorzugt 15 bis 80, besonders bevorzugt 20 bis 75, ganz besonders bevorzugt 25 bis 70 und insbesondere 30 bis 65 mg KOH/g. Oder im Falle hydroxylgruppenhaltiger Bindemittel liegt die OH-Zahl vorzugsweise bei 15 bis 300, bevorzugt 20 bis 250, besonders bevorzugz 25 bis 200, ganz besonders bevorzugt 30 bis 150 und insbesondere 35 bis 120 mg KOH/g. Oder im Falle epoxidgruppenhaltiger Bindemittel liegt das Epoxidäquivalentgewicht vorzugsweise bei 400 bis 2.500, bevorzugt 420 bis 2.200, besonders bevorzugt 430 bis 2.100, ganz besonders bevorzugt 440 bis 2.000 und indesondere 440 bis 1.900.

Die vorstehend beschreibenen komplementären funktionellen Gruppen können nach den üblichen und bekannten Methoden der Polymerchemie in die Bindemittel eingebaut werden. Dies kann beispielsweise durch den Einbau von Monomeren, die die entsprechenden reaktiven funktionellen Gruppen tragen, und/oder mit Hilfe polymeranaloger Reaktionen geschehen.

Beispiele geeigneter olefinisch ungesättigter Monomere mit reaktiven funktionellen Gruppen sind die vorstehend beschriebenen Monomeren (a), insbesondere
(i) Monomere, welche mindestens eine Hydroxyl-, Amino-, Alkoxymethylamino-, Carbamat-, Allophanat- oder Iminogruppe pro Molekül tragen wie
   - Hydroxyalkylester der Acrylsäure, Methacrylsäure oder einer anderen alpha,beta-olefinisch ungesättigten Carbonsäure, die sich von einem Alkylenglykol ableiten, das mit der Säure verestert ist, oder die durch Umsetzung der alpha,beta-olefinisch ungesättigten Carbonsäure mit einem Alkylenoxid wie Ethylenoxid oder Propylenoxid erhältlich sind, insbesondere Hydroxyalkylester der Acrylsäure, Methacrylsäure, Ethacrylsäure, Crotonsäure, Maleinsäure, Fumarsäure oder Itaconsäure, in denen die Hydroxyalkylgruppe bis zu 20 Kohlenstoffatome enthält, wie 2-Hydroxyethyl-, 2-Hydroxypropyl-, 3-Hydroxypropyl-, 3-Hydroxybutyl-, 4-Hydroxybutylacrylat, -methacrylat, - ethacrylat, -crotonat, -maleinat, -fumarat oder -itaconat; oder Hydroxycycloalkylester wie 1,4-Bis(hydroxymethyl)cyclohexan-, Octahydro-4,7-methano-1H-inden-dimethanol- oder Methylpropandiolmonoacrylat, - monomethacrylat, -monoethacrylat, -monocrotonat, - monomaleinat, -monofumarat oder -monoitaconat; Umsetzungsprodukte aus cyclischen Estern, wie z.B. epsilon-Caprolacton und diesen Hydroxyalkyl- oder-cycloalkytestern;
   - olefinisch ungesättigte Alkohole wie Allylalkohol;
   - Polyole wie Trimethylolpropanmono- oder diallylether oder Pentaerythritmono-, -di- oder -triallylether;
   - Umsetzungsprodukte aus Acrylsäure und/oder Methacrylsäure mit dem Glycidylester einer in alpha-Stellung verzweigten Monocarbonsäure mit 5 bis 18 C-Atomen je Molekül, insbesondere einer Versatic®-Säure, oder anstelle des Umsetzungsproduktes eine äquivalenten Menge Acryl- und/oder Methacrylsäure, die dann während oder nach der Polymerisationsreaktion mit dem Glycidylester einer in alpha-Stellung verzweigten Monocarbonsäure mit 5 bis 18 C-Atomen je Molekül, insbesondere einer Versatic®-Säure, umgesetzt wird;
   - Aminoethylacrylat, Aminoethylmethacrylat, Allylamin oder N-Methyliminoethylacrylat
   - N,N-Di(methoxymethyl)aminoethylacrylat oder -methacrylat oder N,N-Di(butoxymethyl)aminopropylacrylat oder - methacrylat;
   - (Meth)Acrylsäureamide wie (Meth)Acrylsäureamid, N-Methyl-, N-Methylol-, N,N-Dimethylol-, N-Methoxymethyl-, N,N-Di(methoxymethyl)-, N-Ethoxymethyl- und/oder N,N-Di(ethoxyethyl)-(meth)acrylsäureamid;
   - Acryloyloxy- oder Methacryloyloxyethyl-, propyl- oder butylcarbamat oder -allophanat; weitere Beispiele geeigneter Monomere, welche Carbamatgruppen enthalten, werden in den Patentschriften US-A-3,479,328, US-A-3,674,838, US-A 4,126,747, US-A- 4,279,833 oder US-A-4,340,497 beschrieben;
(ii) Monomere, welche mindestens eine Säuregruppe pro Molekül tragen, wie
   - Acrylsäure, beta-Carboxyethylacrylat, Methacrylsäure, Methacrylsäure, Crotonsäure, Maleinsäure, Fumarsäure oder Itaconsäure;
   - olefinisch ungesättigte Sulfon- oder Phosphonsäuren oder deren Teilester;
   - Maleinsäuremono(meth)acryloyloxyethylester, Bemsteinsäuremono(meth)acryloyloxyethylester oder Phthalsäuremono(meth)acryloyloxyethylester; oder
   - Vinylbenzoesäure (alle Isomere), alpha-Methylvinylbenzoesäure (alle Isomere) oder Vinylbenzsolsulfonsäure (alle Isomere).
(iii) Epoxidgruppen enthaltende Monomere wie der Glycidylester der Acrylsäure, Methacrylsäure, Ethacrylsäure, Crotonsäure, Maleinsäure, Fumarsäure oder Itaconsäure oder Allylglycidylether.

Sie werden vorzugsweise zur Herstellung der erfindungsgemäß bevorzugten (Meth)Acrylatcopolymerisate, insbesondere der glycidylgruppenhaltigen, verwendet

Höherfunktionelle Monomere der vorstehend beschriebenen Art werden im allgemeinen in untergeordneten Mengen eingesetzt. Im Rahmen der vorliegenden Erfindung sind unter untergeordneten Mengen an höherfunktionellen Monomeren solche Mengen zu verstehen, welche nicht zur Vernetzung oder Gelierung der Copolymerisate, insbesondere der (Meth)Acrylatcopolymerisate, führen, es sei denn, man will gezielt vernetzte polymere Mikroteilchen herstellen.

Beispiele geeigneter Monomereinheiten zur Einführung reaktiver funktioneller Gruppen in Polyester oder Polyester-Polyurethane sind 2,2-Dimethylolethyl- oder -propylamin, die mit einem Keton blockiert sind, wobei die resultierende Ketoximgruppe nach dem Einbau wieder hydrolysiert wird; Oder Verbindungen, die zwei Hydroxylgruppen oder zwei primäre und/oder sekundäre Aminogruppen sowie mindestens eine Säuregruppe, insbesondere mindestens eine Carboxylgruppe und/oder mindestens eine Sulfonsäuregruppe, enthalten, wie Dihydroxypropionsäure, Dihydroxybemsteinsäure, Dihydroxybenzoesäure, 2,2-Dimethylolessigsäure, 2,2-Dimethylolpropionsäure, 2,2-Dimethylolbuttersäure, 2,2-Dimenhylolpentansäure, 2,2-Diaminovaleriansäure, 3,4-Diaminobenzoesäure, 2,4-Diaminotoluolsulfonsäure oder 2,4-Diamino-diphenylethersulfonsäure.

Ein Beispiel zur Einführung reaktiver funktioneller Gruppen über polymeranaloge Reaktionen ist die Umsetzung Hydroxygruppen enthaltender Harze mit Phosgen, wodurch Chlorformiatgruppen enthaltende Harze resultieren, und die polymeranaloge Umsetzung der Chlorformiatgruppen enthaltenden Harze mit Ammoniak und/oder primären und/oder sekundären Aminen zu Carbamatgruppen enthaltenden Harzen. Weitere Beispiele geeigneter Methoden dieser Art sind aus den Patentschriften US 4,758,632 A1, US 4,301,257 A1 oder US 2,979,514 A1 bekannt Außerdem ist es möglich, Carboxylgruppen durch die polymeranaloge Reaktion von Hydroxylgruppen mit Carbonsäureanhydriden, wie Maleinsäureanhydrid oder Phthalsäureanhydrid, einzuführen.

Die Bindemittel der erfindungsgemäßen Dual-Cure-Pulverslurries und - Pulverlacke enthalten desweiteren im statistischen Mittel mindestens eine, vorzugsweise mindestens zwei, Gruppe(n) mit mindestens einer mit aktinischer Strahlung aktivierbaren Bindung(en) pro Molekül.

Im Rahmen der vorliegenden Erfindung wird unter einer mit aktinischer Strahlung aktivierbaren Bindung eine Bindung verstanden, die bei Bestrahlen mit aktinischer Strahlung reaktiv wird und mit anderen aktivierten Bindungen ihrer Art Polymerisationsreaktionen und/oder Vernetzungsreaktionen eingeht, die nach radikalischen und/oder ionischen Mechanismen ablaufen. Beispiele geeigneter Bindungen sind Kohlenstoff-Wasserstoff-Einzelbindungen oder Kohlenstoff-Kohlenstoff-, Kohlenstoff-Sauerstoff-, Kohlenstoff-Stickstoff-, Kohlenstoff-Phosphor-oder Kohlenstoff-Silizium-Einzelbindungen oder -Doppelbindungen. Von diesen sind die Kohlenstoff-Kohlenstoff-Doppelbindungen besonders vorteilhaft und werden deshalb erfindungsgemäß ganz besonders bevorzugt verwendet Der Kürze halber werden sie im folgenden als "Doppelbindungen" bezeichnet.

Demnach enthält die erfindungsgemäß bevorzugte Gruppe eine Doppelbindung oder zwei, drei oder vier Doppelbindungen. Werden mehr als eine Doppelbindung verwendet, können die Doppelbindungen konjugiert sein. Erfindungsgemäß ist es indes von Vorteil, wenn die Doppelbindungen isoliert, insbesondere jede für sich endständig, in der hier in Rede stehenden Gruppe vorliegen. Erfindungsgemäß ist es von besonderem Vorteil zwei, insbesondere eine, Doppelbindung zu verwenden.

Das Dual-Cure-Bindemittel enthält im statistischen Mittel mindestens eine der vorstehend beschriebenen mit aktinischer Strahlung aktivierbaren Gruppen. Dies bedeutet, daß die Funktionalität des Bindemittels in dieser Hinsicht ganzzahlig, d.h., beispielsweise gleich zwei, drei, vier, fünf oder mehr ist, oder nicht ganzzahlig, d.h., beispielsweise gleich 2,1 bis 10,5 oder mehr ist. Welche Funktionalität man wählt, richtet sich nach den Anforderungen, die an die jeweiligen pigmentierten erfindungsgemäßen Dual-Cure-Pulverslurries und -Pulverlacken gestellt werden.

Werden im statistischen Mittel mehr als eine mit aktinischer Strahlung aktivierbare Gruppe pro Molekül angewandt, sind die Gruppen strukturell voneinander verschieden oder von gleicher Struktur.

Sind sie strukturell voneinander verschieden, bedeutet dies im Rahmen der vorliegenden Erfindung, daß zwei, drei, vier oder mehr, insbesondere aber zwei, mit aktinischer Strahlung aktivierbare Gruppen verwendet werden, die sich von zwei, drei, vier oder mehr, insbesondere aber zwei, Monomerklassen ableiten.

Beispiele geeigneter Gruppen sind (Meth)Acrylat-, Ethacrylat-, Crotonat-, Cinnamat-, Vinylether-, Vinylester-, Dicyclopentadienyl-, Norbornenyl-, Isoprenyl-, Isopropenyl-, Allyl- oder Butenylgruppen; Dicyclopentadienyl-, Norbomenyl-, Isoprenyl-, Isopropenyl-, Allyl- oder Butenylethergruppen oder Dicyclopentadienyl-, Norbomenyl-, Isoprenyl-, Isopropenyl-, Allyl- oder Butenylestergruppen, insbesondere aber Acrylatgruppen.

Vorzugsweise sind die Gruppen über Urethan-, Harnstoff-, Allophanat-, Ester-, Ether- und/oder Amidgruppen, insbesondere aber über Estergruppen, an die jeweiligen Grundstrukturen der Bindemittel gebunden. Üblicherweise geschieht dies durch übliche und bekannte polymeranaloge Reaktionen wie etwa die Reaktion von seitenständigen Glycidylgruppen mit den vorstehend beschriebenen olefinisch ungesättigten Monomeren, die eine Säuregruppe enthalten, von seitenständigen Hydroxylgruppen mit den Halogeniden dieser Monomeren, von Hydroxylgruppen mit Doppelbindungen enhaltenden Isocyanaten wie Vinylisocyanat, Methacryloylisocyanat und/oder 1-(1-Isocyanato-1-methylethyl)-3-(1-methylethenyl)-benzol (TMI® der Firma CYTEC) oder von Isocanatgruppen mit den vorstehend beschriebenen hydroxylgruppenhaltigen Monomeren.

Es können in den Partikeln indes auch Gemische aus rein thermisch härtbaren und rein mit aktinischer Strahlung härtbaren Bindemitteln angewandt werden.

Die stoffliche Zusammensetzung der Bindemittel weist im Grunde keine Besonderheiten auf, sondern es kommen
- all die in den US-Patentschrift US 4,268,542 A1 oder US 5,379,947 A1 und den Patentanmeldungen DE 27 10 421 A1, DE 195 40 977 A1, DE 195 18 392 A1, DE 196 17 086 A1, DE 196 13 547 A1, DE 196 18 657 A1, DE 196 52 813 A1, DE 196 17 086 A1, DE 198 14 471 A1, DE 198 41 842 A1 oder DE 198 41 408 A1, den nicht vorveröffentlichten deutschen Patentanmeldungen DE 199 08 018.6 oder DE 199 08 013.5 oder der europäischen Patentschrift EP 0 652 264 A1 beschriebenen, für die Verwendung in thermisch und/oder mit aktinischer Strahlung härtbaren Pulverklarlack-Slurries vorgesehenen Bindemittel,
- all die in den Patentanmeldungen DE 198 35 296 A1, DE 197 36 083 A1 oder DE 198 41 842 A1 beschriebenen, für die Verwendung in Dual-Cure-Klarlacken vorgesehenen Bindemittel oder
- all die in der deutschen Patentanmeldung DE 42 22 194 A1, der Produkt-Information der Firma BASF Lacke + Farben AG, "Pulverlacke", 1990, oder der Firmenschrift von BASF Coatings AG "Pulverlacke, Pulverlacke für industrielle Anwendungen", Januar, 2000 beschriebenen, für die Verwendung in thermisch härtbaren Pulverklarlacken vorgesehenen Bindemittel in Betracht

Als zusätzliche Bindemittel für die Dual-Cure-Pulverslurries und Pulverlacke kommen die in den europäischen Patentanmeldungen EP 0 928 800 A1, EP 0 636 669 A1, EP 0 410 242 A1, EP 0 783 534 A1, EP 0 650 978 A1, EP 0 650 979 A1, EP 0 650 985 A1, EP 0 540 884 A1, EP 0 568 967 A1, EP 0 054 505 A1 oder EP 0 002 866 A1, den deutschen Patentanmeldungen DE 197 09 467 A1, DE 42 03 278 A1, DE 33 16 593 A1, DE 38 36 370 A1, DE 24 36 86 A1 oder DE 20 03 579 B1, den internationalen Patentanmeldungen WO 97/46549 oder WO 99/14254 oder den amerikanischen Patentschriften US 5,824,373 A1, US 4,675,234 A1, US 4,634,602 A1, US 4,424,252 A1, 4,208,313 A1, US 4,163,810 A1, US 4,129,488 A1, US 4,064,161 A1 oder US 3,974,303 A1 beschriebenen, zur Verwendung in UV-härtbaren Klarlacken und Pulverklarlacken vorgesehenen Bindemittel in Betracht

Auch die Herstellung der Bindemittel weist keine methodischen Besonderheiten auf, sondern erfolgt mit Hilfe der üblichen und bekannten Methoden der Polymerenchemie, wie sie beispielsweise in den vorstehend aufgeführten Patentschriften im Detail beschrieben werden.

Weitere Beispiele geeigneter Herstellverfahren für (Meth)Acrylatcopolymerisate werden in den europäischen Patentanmeldungen oder EP 0 767 185 A1, den deutschen Patenten DE 2214 650 B1 oder DE 27 49 576 B1 und den amerikanischen Patentschriften US 4,091,048 A1, US 3,781,379 A1, US 5,480,493 A1, US 5,475,073 A1 oder US 5,534,598 A1 oder in dem Standardwerk Houben-Weyl, Methoden der organischen Chemie, 4. Auflage, Band 14/1, Seiten 24 bis 255, 1961, beschrieben. Als Reaktoren für die Copolymerisation kommen die üblichen und bekannten Rührkessel, Rührkesselkaskaden, Rohrreaktoren, Schlaufenreaktoren oder Taylorreaktoren, wie sie beispielsweise in der Patentschriften und den Patentanmeldungen DE 1 071 241 B1, EP 0 498 583 A1 oder DE 198 28 742 A1 oder in dem Artikel von K. Kataoka in Chemical Engineering Science, Band 50, Heft 9, 1995, Seiten 1409 bis 1416, beschrieben werden, in Betracht

Die Herstellung von Polyestern und Alkydharzen wird beispielsweise noch in dem Standardwerk Ullmanns Encyklopädie der technische Chemie, 3. Auflage, Band 14, Urban & Schwarzenberg, München, Berlin, 1963, Seiten 80 bis 89 und Seiten 99 bis 105, sowie in den Büchern: "Résines Alkydes-Polyesters" von J. Bourry, Paris, Verlag Dunod, 1952, "Alkyd Resins" von C. R. Martens, Reinhold Publishing Corporation, New York, 1961, sowie "Alkyd Resin Technology" von T. C. Patton, Intersience Publishers, 1962, beschrieben.

Die Herstellung von Polyurethanen und/oder acrylierten Polyurethane wird beispielsweise noch in den Patentanmeldungen EP 0 708 788 A1, DE 44 01 544 A1 oder DE 195 34 361 A1 beschrieben.

Von diesen Bindemitteln sind die epoxidgruppenhaltigen (Meth)Acrylatcopolymerisate, mit einem Epoxidäquivalentgewicht vorzugsweise bei 400 bis 2.500, bevorzugt 420 bis 2.200, besonders bevorzugt 430 bis 2.100, ganz besonders bevorzugt 440 bis 2.000 und insbesondere 440 bis 1.900, einem zahlenmittleren Molekulargewicht (gelpermeationschromatographisch unter Verwendung eines Polystyrolstandards bestimmt) von vorzugsweise 2.000 bis 20.000 und insbesondere 3.000 bis 10.000, und einer Glasübergangstemperatur (T_{G}) von vorzugsweise 30 bis 80, bevorzugt 40 bis 70 und insbesondere 40 bis 60°C (gemessen mit Hilfe der differential scanning calometrie (DSC), wie sie insbesondere für die Verwendung in thermisch härtbaren Pulverklarlack-Slurries in Betracht kommen (s.o.) und wie sie außerdem noch in den Patentschriften und Patentanmeldungen EP 0 299 420 A1, DE 22 14 650 B1, DE 27 49 576 B1, US 4,091,048 A1 oder US 3,781,379 A1 beschrieben werden, besonders vorteilhaft und werden besonders bevorzugt verwendet

Die thermisch oder thermisch und mit aktinischer Strahlung härtbaren fremdvernetzenden erfindungsgemäßen Pulverlacke und Pulverslurries bzw. die ihrer Herstellung dienenden Partikel enthalten mindestens ein Vernetzungsmittel, das die zu den reaktiven funktionellen Gruppen der Bindemittel komplementären reaktiven funktionellen Gruppen enthält. Der Fachmann kann daher die für den Einzelfall geeigneten Vernetzungsmittel leicht auswählen.

Beispiele geeigneter Vernetzungsmittel sind
- Aminoplastharze, wie sie beispielsweise in Römpp Lexikon Lacke und Druckfarben, Georg Thieme Verlag, 1998, Seite 29, »Aminoharze«, dem Lehrbuch "Lackadditive" von Johan Bieleman, Wiley-VCH, Weinheim, New York, 1998, Seiten 242 ff., dem Buch "Paints, Coatings and Solvents", second completely revised edition, Edit D. Stoye und W. Freitag, Wiley-VCH, Weinheim, New York, 1998, Seiten 80 ff., den Patentschriften US 4 710 542 A1 oder EP 0 245 700 A1 sowie in dem Artikel von B. Singh und Mitarbeiter "Carbamylmethylated Melamines, Novel Crosslinkers for the Coatings Industry", in Advanced Organic Coatings Science and Technology Series, 1991, Band 13, Seiten 193 bis 207, beschrieben werden,
- Carboxylgruppen enthaltende Verbindungen oder Harze, wie sie beispielsweise in der Patentschrift DE 196 52 813 A1 oder 198 41 408 A1 beschrieben werden, insbesondere 1,12-Dodecandisäure (1,10-Decandicarbonsäure),
- Epoxidgruppen enthaltende Verbindungen oder Harze, wie sie beispielsweise in den Patentschriften EP 0 299 420 A1, DE 22 14 650 B1, DE 27 49 576 B1, US 4,091,048 A1 oder US 3,781,379 A1 beschrieben werden,
- blockierte Polyisocyanate, wie sie beispielsweise in den Patentschriften US 4,444,954 A1, DE 196 17 086 A1, DE 196 31 269 A1, EP 0 004 571 A1 oder EP 0 582 051 A1 beschrieben werden,
- beta-Hydroxyalkylamide wie N,N,N',N'-Tetrakis(2-hydroxyethyl)adipamid oder N,N,N',N'-Tetrakis(2-hydroxypropyl)-adipamid und/oder
- Tris(alkoxycarbonylamino)-triazine, wie sie in den Patentschriften US 4,939,213 A1, US 5,084,541 A9, US 5,288,865 A1 oder EP 0 604 922 A1 beschrieben werden.

Der Gehalt der Partikel an den Vernetzungsmitteln kann ebenfalls sehr breit variieren und richtet sich nach den Erfordernissen des Einzelfalls, insbesondere nach der Anzahl der vorhandenen reaktiven funktionellen Gruppen und nach der Vemetzungsdichte, wie sie in den aus den erfindungsgemäßen Pulverslurries und Pulverlacke hergestellten Beschichtungen, Klebschichten und Dichtungen vorliegen soll. Vorzugsweise liegt der Gehalt bei bei 1 bis 50, bevorzugt 2 bis 45, besonders bevorzugt 3 bis 40, ganz besonders bevorzugt 4 bis 35 und insbeondere 5 bis 30 Gew.-%, bezogen auf den Festkörper der efindungsgemäßen Pulverslurries und Pulverlacke.

Je nach Verwendungszweck der erfindungsgemäßen Pulverslurries und Pulverlacke können sie farb- und/oder effektgebende, fluoreszierende, elektrisch leitfähige und/oder magnetisch abschirmende Pigmente, Metallpulver, organische und anorganische, transparente oder opake Füllstoffe und/oder Nanopartikel (nachstehend zusammenfassend "Pigmente" genannt) enthalten.

Die Pigmente werden verwendet, wenn die erfindungsgemäßen Pulverslurries und Pulverlacke als pigmentierte Beschichtungsstoffe, Klebstoffe und Dichtungsmassen eingesetzt werden sollen. Vorzugsweise werden sie bei dem erfindungsgemäßen Verfahren in der Form von Pigmentpasten oder Pigmentpräparationen (vgl. Römpp Lexikon Lacke und Druckfarben, Georg Thieme Verlag, Stuttgart, New York, 1998, Pigmentpräparationen «, Seite 452) in die wäßrigen Medien eindispergiert oder sie bilden, wie vorstehend bereits erwähnt, die wäßrigen Medien. Bevorzugt enthalten sie die vorstehend beschriebenen, erfindungsgemäß zu verwendenden Emulgatoren.

In einer Ausführungsform des erfindungsgemäßen Verfahrens enthalten die emulgierten oder suspendierten Partikel mindestens ein Pigment; d.h., die Gesamtmenge der eingesetzten Pigmente befindet sich in und/oder auf den Partikeln.

In einer weiteren Ausführungsform des erfindungsgemäßen Verfahrens enthalten die emulgierten oder suspendierten Partikel kein Pigment; d.h. alle Pigmente liegen als separate feste Phase vor. Für deren Teilchengröße gilt das vorstehend Gesagte sinngemäß.

In noch einer weiteren Ausführungsform des erfindungsgemäßen Verfahrens enthalten die emulgierten oder suspendierten Partikel im vorstehend geschilderten Sinne einen Teil der eingesetzten Pigmente, wogegen der andere Teil der Pigmente als separate feste Phase vorliegt Hierbei kann es sich bei dem in den Partikeln vorliegenden Anteil um die Hauptmenge, d.h. um mehr als 50% der eingesetzten Pigmente handeln.

Es könnnen sich indes auch weniger als 50% in und/oder auf den Partikeln befinden. Hinsichtlich der Teilchengrößen gilt das vorstehend Gesagte auch hier sinngemäß.

Weicher Variante des erfindungsgemäßen Verfahrens bei der Herstellung der pigmentierten erfindungsgemäßen Pulverslurries der Vorzug gegeben wird, richtet sich insbesondere nach der Natur der Pigmente und ihrer Funktionen. Dient das erfindungsgemäße Verfahren der Herstellung der pigmentierten erfindungsgemäßen Pulverlacke, ist die Variante, bei der alle oder der überwiegende Anteil der Pigmente in und/oder auf den emulgierten und suspendierten Partikeln vorliegt, von Vorteil und wird deshalb bevorzugt angewandt

Beispiele geeigneter Effektpigmente sind Metallplättchenpigmente wie handelsübliche Aluminiumbronzen, gemäß DE 36 36 183 A1 chromatierte Aluminiumbronzen, und handelsübliche Edelstahlbronzen sowie nichtmetallische Effektpigmente, wie zum Beispiel Perlglanz- bzw. Interferenzpigmente, plättchenförmige Effektpigmente auf der Basis von Eisenoxid, das einen Farbton von Rosa bis Braunrot aufweist oder flüssigkristalline Effektpigmente. Ergänzend wird auf Römpp Lexikon Lacke und Druckfarben, Georg Thieme Verlag, 1998, Seiten 176, »Effektpigmente« und Seiten 380 und 381 »Metalloxid-Glimmer-Pigmente« bis »Metallpigmente«, und die Patentanmeldungen und Patente DE 36 36 156 A1, DE 37 18 446 A1, DE 37 19 804 A1, DE 39 30 601 A1, EP 0 068 311 A1, EP 0 264 843 A1, EP 0 265 820 A1, EP 0 283 852 A1, EP 0 293 746 A1, EP 0 417 567 A1, US 4,828,826 A oder US 5,244,649 A verwiesen.

Beispiele für geeignete anorganische farbgebende Pigmente sind Weißpigmente wie Titandioxid, Zinkweiß, Zinksulfid oder Lithopone; Schwarzpigmente wie Ruß, Eisen-Mangan-Schwarz oder Spinellschwarz; Buntpigmente wie Chromoxid, Chromoxidhydratgrün, Kobaltgrün oder Ultramaringrün, Kobaltblau, Ultramarinblau oder Manganblau, Ultramarinviolett oder Kobalt und Manganviolett, Eisenoxidrot, Cadmiumsulfoselenid, Molybdatrot oder Ultramarinrot; Eisenoxidbraun, Mischbraun, Spinell- und Korundphasen oder Chromorange; oder Eisenoxidgelb, Nickeltitangelb, Chromtitangelb, Cadmiumsulfid, Cadmiumzinksulfid, Chromgelb oder Bismutvanadat.

Beispiele für geeignete organische farbgebende Pigmente sind Monoazopigmente, Bisazopigmente, Anthrachinonpigmente, Benzimidazolpigmente, Chinacridonpigmente, Chinophthalonpigmente, Diketopyrrolopyrrolpigmente, Dioxazinpigmente, Indanthronpigmente, Isoindolinpigmente, Isoindolinonpigmente, Azomethinpigmente, Thioindigopigmente, Metallkomplexpigmente, Perinonpigmente, Perylenpigmente, Phthalocyaninpigmente oder Anilinschwarz.

Ergänzend wird auf Römpp Lexikon Lacke und Druckfarben, Georg Thieme Verlag, 1998, Seiten 180 und 181, »Eisenblau-Pigmente« bis »Eisenoxidschwarz«, Seiten 451 bis 453 Pigmente« bis »Pigmentvolumenkonzentration«, Seite 563 »Thioindigo-Pigmente«, Seite 567 »Titandioxid-Pigmente«, Seiten 400 und 467, »Natürlich vorkommende Pigmente«, Seite 459 »Polycyclische Pigmente«, Seite 52, »Azomethin-Pigmente«, »Azopigmente«, und Seite 379, »MetallkomplexPigmente«, verwiesen.

Beispiele für fluoreszierende Pigmente (Tagesleuchtpigmente) sind Bis(azomethin)-Pigmente.

Beispiele für geeignete elektrisch leitfähige Pigmente sind Titandioxid/Zinnoxid-Pigmente.

Beispiele für magnetisch abschirmende Pigmente sind Pigmente auf der Basis von Eisenoxiden oder Chromdioxid.

Beispiele für geeignete Metallpulver sind Pulver aus Metallen und Metallegierungen Aluminium, Zink, Kupfer, Bronze oder Messing.

Beispiele geeigneter organischer und anorganischer Füllstoffe sind Kreide, Calciumsulfate, Bariumsulfat, Silikate wie Talkum, Glimmer oder Kaolin, Kieselsäuren, Oxide wie Aluminiumhydroxid oder Magnesiumhydroxid oder organische Füllstoffe wie Kunststoffpulver, insbesondere aus Poylamid oder Polyacrlynitril. Ergänzend wird auf Römpp Lexikon Lacke und Druckfarben, Georg Thieme Verlag, 1998, Seiten 250 ff., »Füllstoffe«, verwiesen.

Vorzugsweise werden Glimmer und Talkum angewandt, wenn die Kratzfestigkeit der aus den erfindungsgemäßen Pulverlacken hergestellten Beschichtungen verbessert werden soll.

Außerdem ist es von Vorteil, Gemische von plättchenförmigen anorganischen Füllstoffen wie Talk oder Glimmer und nichtplättchenförmigen anorganischen Füllstoffen wie Kreide, Dolomit Calciumsulfate, oder Bariumsulfat zu verwenden, weil hierdurch die Viskosität und das Fließverhalten sehr gut eingestellt werden kann.

Beispiele geeigneter transparenter Füllstoffe sind solche auf der Basis von Siliziumdioxid, Aluminiumoxid oder Zirkoniumoxid.

Geeignete Nanopartikel werden ausgewählt aus der Gruppe, bestehend aus hydrophile und hydrophoben, insbesondere hydrophilen, Nanopartikeln auf der Basis von Siliziumdioxid, Aluminiumoxid, Zinkoxid, Zirkoniumoxid und der Polysäuren und Heteropolysäuren von Übergangsmetallen, vorzugsweise von Molybdän und Wolfram, mit einer Primärpartikelgröße < 50 nm, bevorzugt 5 bis 50 nm, insbesondere 10 bis 30 nm. Vorzugsweise haben die hydrophilen Nanopartikel keinen Mattierungseffekt. Besonders bevorzugt werden Nanopartikel auf der Basis von Siliziumdioxid verwendet.

Ganz besonders bevorzugt werden hydrophile pyrogene Siliziumdioxide verwendet, deren Agglomerate und Aggregate eine kettenförmige Struktur haben und die durch die Flammenhydrolyse von Siliziumtetrachlorid in einer Knallgasflamme herstellbar sind. Diese werden beispielweise von der Firma Degussa unter der Marke Aerosil ® vertrieben. Ganz besonders bevorzugt werden auch gefällte Wassergläser, wie Nanohektorite, die beispielsweise von der Firma Südchemie unter der Marke Optigel ® oder von der Firma Laporte unter der Marke Laponite ® vertrieben werden, verwendet

Pigmentpasten oder Pigmentpräparationen können bei Verwendung der vorstehend beschriebenen, erfindungsgemäß zu verwendenden Emulgatoren einen besonders hohen Gehalt von Nanopartikeln haben, was ein weiterer wertvoller Vorteil der erfindungsgemäß zu verwendenden Emulgatoren ist

Die erfindungsgemäßen Pulverslurries und Pulverlacke, können zusätzlich zu den vorstehend beschriebenen Pigmenten oder anstelle von diesen molekulardispers verteil organische Farbstoffe enthalten. Diese molekulardispers verteilten Farbstoffe können entweder in den emulgierten oder suspendierten Partikeln oder in der kontinuierlichen Phase, d. h. dem wäßrigen Medium, vorhanden sein. Sie können indes auch in den Partikeln oder in der kontinuierlichen Phase vorliegen. Hierbei kann es sich bei dem in den Partikeln vorliegenden Anteil um die Hauptmenge, d.h. um mehr als 50% der eingesetzten organischen Farbstoffe handeln. Es könnnen sich indes auch weniger als 50% in den Partikeln befinden. Die Verteilung der organischen Farbstoffe zwischen den Phasen kann dem thermodynamischen Gleichgewicht entsprechen, das aus der Löslichkeit der organischen Farbstoffe in den Phasen resultiert. Die Verteilung kann aber auch weit von dem thermodynamischen Gleichgewicht entfernt liegen. Dienen die emulgierten und suspendierten Partikel der Herstellung der erfindungsgemäßen Pulverlacke, sind die Farbstoffe nur in den Partikeln enthalten.

Geeignet sind alle organischen Farbstoffe, die in den erfindungsgemäßen Pulverslurries und Pulverlacken im vorstehend geschilderten Sinne löslich sind. Gut geeignet sind lichtechte organische Farbstoffe. Besonders gut geeignet sind lichtechte organische Farbstoffe mit einer geringen oder nicht vorhandenen Neigung zur Migration aus den aus den erfindungsgemäßen Pulverslurries und Pulverlacken hergestellten Beschichtungen, Klebschichten und Dichtungen. Die Migrationsneigung kann der Fachmann anhand seines allgemeinen Fachwissens abschätzen und/oder mit Hilfe einfacher orientierender Vorversuche beispielsweise im Rahmen von Tönversuchen ermitteln.

Der Gehalt der erfindungsgemäßen Pulverslurries und Pulverlacke an den molekulardispers verteilten organischen Farbstoffen kann außerordentlich breit variieren und richtet sich in erster Linie nach der Farbe und dem Buntton, der eingestellt werden soll, sowie nach der Menge der gegebenenfalls vorhandenen Pigmenten.

Beispiele geeigneter Zusatzstoffe, die sowohl in den pigmentierten als auch in den nicht pigmentierten Pulverslurries und Pulverlacken enthalten sein können, sind UV-Absorber, Antioxidantien, Lichtschutzmittel, Radikalfänger, Entlüftungsmittel, zusätzliche Emulgatoren, Netzmittel, Slipadditive, Polymerisationsinhibitoren, Katalysatoren für die Vernetzung, thermolabile radikalische Initiatoren, Photoinitiatoren, thermisch härtbare Reaktiverdünner, mit aktinischer Strahlung härtbare Reaktiwerdünner, Haftvermittler, Verlaufmittel, rheologiesteuemde Additive (Verdicker), filmbildende Hilfsmittel, Flammschutzmittel, Korrosionsinhibitoren, Rieselhilfen, Wachse, Sikkative, Biozide und/oder Mattierungsmittel.

Beispiele geeigneter thermisch härtbarer Reaktiverdünner sind stellungsisomere Diethyloctandiole oder Hydroxylgruppen enthaltende hyperverzweigte Verbindungen oder Dendrimere, wie sie in den deutschen Patentanmeldungen DE 198 09 643 A1, DE 198 40 605 A1 oder DE 198 05 421 A1 beschrieben werden.

Beispiele geeigneter mit aktinischer Strahlung härtbarer Reaktivverdünner sind die in Römpp Lexikon Lacke und Druckfarben, Georg Thieme Verlag, Stuttgart, New York, 1998, auf Seite 491 unter dem Stichwort »Reaktivverdünner« beschriebenen.

Beispiele geeigneter Lichtschutzmittel sind HALS-Verbindungen, Benztriazole oder Oxalanilide.

Beispiele geeigneter Antioxidantien sind Hydrazine und Phosphorverbindungen.

Beispiele geeigneter Polymerisationsinhibitoren sind organische Phosphite oder 2,6 Di-tert-Butylphenol-Derivate.

Beispiele geeigneter thermolabiler radikalischer Initiatoren sind Dialkylperoxide, Hydroperoxide, Perester, Azodinitrile oder C-C-spaltende Initiatoren.

Beispiele geeigneter Photoinitiatoren werden in Römpp Chemie Lexikon, 9. erweiterte und neubearbeitete Auflage, Georg Thieme Verlag Stuttgart, Bd. 4, 1991, oder in Römpp Lexikon Lacke und Druckfarben, Georg Thieme Verlag Stuttgart, 1998, Seiten 444 bis 446, beschrieben.

Beispiele geeigneter Katalysatoren für die Vernetzung sind Wismutlactat,-citrat, -ethylhexanoat oder -dimethylolpropionat Dibutylzinndilaurat, Lithiumdecanoat oder Zinkoctoat, mit Aminen blockierte organische Sulfonsäuren, quartemäre Ammoniumverbindungen, Amine, Imidazol und Imidazolderivate wie 2-Styrylimidazol, 1-Benzyl-2-methylimidazol, 2-Methylimidazol und 2-Butylimidazol, wie in dem belgischen Patent Nr. 756,693 beschrieben werden, oder Phosphonium-Katalysatoren wie Ethyltriphenylphosphoniumiodid, Ethyltriphenylphosphoniumchlorid, Ethyltriphenylphosphoniumthiocyanat, Ethyltriphenylphosphonium-Acetat Essigsäurekomplex, Tetrabutylphosphoniumiodid, Tetrabutylphosphoniumbromid und Tetrabutylphosphonium-Acetat-Essigsäurekomplex, wie sie beispielsweise in den US-Patentschriften US 3,477,990 A oder US 3,341,580 A beschrieben werden.

Beispiele geeigneter Entlüftunsmittel sind Diazadicycloundecan oder Benzoin.

Beispiele geeigneter zusätzlicher Emulgatoren sind nicht ionische Emulgatoren, wie alkoxylierte Alkanole und Polyole, Phenole und Alkylphenole oder anionische Emulgatoren wie Alkalisalze oder Ammoniumsalze von Alkancarbonsäuren, Alkansulfonsäuren, und Sulfosäuren von alkoxylierten Alkanolen und Polyolen, Phenolen und Alkylphenolen.

Beispiele geeigneter Netzmittel sind Siloxane, fluorhaltige Verbindungen, Carbonsäurehalbester, Phosphorsäureester, Polyacrylsäuren und deren Copolymere oder Polyurethane.

Ein Beispiel für einen geeigneten Haftvermittler ist Tricydodecandimethanol.

Beispiele für geeignete filmbildende Hilfsmittel sind Cellulose-Derivate.

Beispiel geeigneter rheologiesteuemder Additive sind die aus den Patentschriften WO 94/22968, EP 0 276 501 A1, EP 0 249 201 A1 oder WO 97/12945 bekannten; vernetzte polymere Mikroteilchen, wie sie beispielsweise in der EP 0 008 127 A1 offenbart sind; anorganische Schichtsilikate wie Aluminium-Magnesium-Silikate, Natrium-Magnesium- und Natrium-Magnesium-Fluor-Lithium-Schichtsilikate des Montmorilionit-Typs; Kieselsäuren wie Aerosile; oder synthetische Polymere mit ionischen und/oder assoziativ wirkenden Gruppen wie Polyvinylalkohol, Poly(meth)acrylamid, Poly(meth)acrylsäure, Polyvinylpyrrolidon, Styrol-Maleinsäureanhydrid- oder Ethylen-Maleinsäureanhydrid-Copolymere und ihre Derivate oder hydrophob modifizierte ethoxylierte Urethane, wie sie beispielsweise in der Patentschrift DE 196 52 813 A1, Spalte 5, Zeilen 28 bis 59, beschrieben werden, oder Polyacrylate.

Ein Beispiel für ein geeignetes Mattierungsmittel ist Magnesiumstearat.

Weitere Beispiele für die vorstehend aufgeführten Zusatzstoffe sowie Beispiele geeigneter Verlaufmittel, Flammschutzmittel, Sikkative, Trocknungsmittel, Hautverhinderungsmittel, Korrosionsinhibitoren, Biozide und Wachse werden in dem Lehrbuch »Lackadditive« von Johan Bieleman, Wiley-VCH, Weinheim, New York, 1998, im Detail beschrieben.

Ansonsten kommen noch niedrigsiedende und hochsiedende ("lange") organische Lösemittel, wie sie üblicherweise auf dem Gebiet der Beschichtungsstoffe verwendet werden, als Zusatzstoffe in Betracht Im Hinblick darauf, daß die erfindungsgemäßen Pulverslurries und Pulverlacke vorzugsweise frei von VOC sind, werden die organischen Lösemittel nur ausnahmsweise eingesetzt.

Für das erfindungsgemäße Verfahren können die vorstehend beschriebenen Zusatzstoffe sowohl in den vorstehend beschriebenen wäßrigen Medien oder in den vorstehend beschriebenen Schmelzen eingesetzt werden. Maßgebend ist vor allem, ob sie ihrer üblichen und bekannten Funktionen nach besser in den emulgierten oder suspendierten Partikeln oder besser in der kontinuierlichen, d. h. wäßrigen, Phase vorliegen sollten. So ist es beispielsweise für die erfindungsgemäße Pulverslurry von Vorteil, wenn die Verdicker in dem wäßrigen Medium, d.h. im wesentlichen außerhalb der Partikel, vorliegen. Dient das erfindungsgemäße Verfahren der Herstellung der erfindungsgemäßen Pulverlacke, liegen die Zusatzstoffe überwiegend oder ganz in den Schmelzen und den hieraus hergestellten emulgierten und suspendierten Partikeln vor. Der Fachmann kann daher die für den jeweiligen Einzelfall optimale Verfahrensvariante anhand seines allgemeinen Fachwissens gegebenenfalls unter Zuhilfenahme einfacher Vorversuche leicht ermitteln.

Die erfindungsgemäßen Pulverslurries weisen eine hervorragende Stabilität und Lagerfähigkeit und ein hervorragendes Applikafionsverhalten auf.

Die erfindungsgemäßen Pulverlacke haben eine hervorragende Fluidität, Lagerfähigkeit und Transportfähigkeit und zeigen auch bei längerer Lagerung kein Verbacken. Die Applikationsverhalten ist hervorragend.

Die erfindungsgemäßen Pulverslurries und Pulverlacke eignen sich hervorragend als Beschichtungsstoffe, Klebstoffe und Dichtungsmassen oder zu deren Herstellung.

Die erfindungsgemäßen Beschichtungsstoffe sind hervorragend für die Herstellung von ein- oder mehrschichtigen, farb- und/oder effektgebenden, elektrisch leitfähigen, magnetisch abschirmenden oder fluoreszierenden Beschichtungen, wie Füllerlackierungen, Basislackierungen, Unidecklackierungen oder Kombinationseffektschichten, oder von ein- oder mehrschichtigen Klartackierungen geeignet

Die erfindungsgemäßen Klebstoffe sind hervorragend für die Herstellung von Klebschichten, und die erfindungsgemäßen Dichtungsmassen sind hervorragend für die Herstellung von Dichtungen geeignet

Ganz besondere Vorteile resultieren bei der Verwendung der nicht pigmentierten erfindungsgemäßen Pulverslurries und Pulverlacke als Klarlacke für die Herstellung von ein- oder mehrschichtigen Klarlackierungen. Insbesondere werden die erfindungsgemäßen Klarlacke zur Herstellung von farb- und/oder effektgebenden Mehrschichtlackierungen nach dem naß-in-naß Verfahren verwendet, bei dem ein Basislack, insbesondere ein Wasserbasislack, auf die Oberfläche eines Substrats appliziert wird, wonach man die resultierende Basislackschicht, ohne sie auszuhärten, trocknet und mit einer Klarlackschicht überschichtet Anschließend werden die beiden Schichten gemeinsam gehärtet

Ganz besondere Vorteile resultieren desweiteren bei der Verwendung der pigmentierten erfindungsgemäßen Pulverslurries und Pulverlacke für die Herstellung ein- oder mehrschichtiger farb- und/oder effektgebender Lackierungen oder von Kombinationseffektschichten. Unter einer Kombinationseffektschicht ist eine Lackierung zu verstehen, die in einer farb- und/oder effektgebenden Lackierung mindestens zwei Funktionen erfüllt. Funktionen dieser Art sind insbesondere der Schutz vor Korrosion, die Haftvermittlung, die Absorption mechanischer Energie und die Farb- und/oder Effektgebung. Vorzugsweise dient die Kombinationseffektschicht der Absorption mechanischer Energie sowie der Farb- und/oder Effektgebung zugleich; sie erfüllt also die Funktionen einer Füllerlackierung oder Steinschlagschutzgrundierung und einer Basislackierung. Vorzugsweise hat die Kombinationseffektschicht darüber hinaus noch Korrosionsschutzwirkung und/oder haftvermittelnde Wirkung.

Die pigmentierten Beschichtungen oder Lackierungen können ebenfalls mit Hilfe von Naß-in-naß-Vertahren hergestellt werden. Beispielsweise können die pigmentierten erfindungsgemäßen Pulverslurries und Pulverlacke auf nicht oder nicht vollständig gehärtete Elektrotauchlackschichten appliziert werden, wonach man die übereinanderliegenden Schichten gemeinsam härtet

Der ganz besondere Vorteil der erfindungsgemäßen Pulverslurries und Pulverlacke liegt darin, daß mit ihrer Hilfe Mehrschichtlackierungen aller Art erzeugt werden können, die völlig oder überwiegend auf den erfindungsgemäßen Pulverslurries und/oder Pulverlacken basieren.

Methodisch weist die Applikation der erfindungsgemäßen Pulverslurries keine Besonderheiten auf, sondern kann durch alle üblichen Applikabonsmethoden, wie z.B. Spritzen, Rakeln, Streichen, Gießen, Tauchen, Träufeln oder Walzen, erfolgen. Vorzugsweise werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heißspritzapplikation wie zum Beispiel Hot-Air- Heißspritzen. Auch hier empfiehlt es sich unter Ausschluß von aktinischer Strahlung zu arbeiten, um eine vorzeitige Vernetzung der erfindungsgemäßen Dual-Cure-Beschichtungsstoffe, Klebstoffe und -Dichtungsmassen zu vermeiden.

Auch die Applikation der Pulverlacke weist keine methodischen Besonderheiten auf, sondern erfolgt beispielsweise nach den üblichen und bekannten Wirbelschichtverfahren, wie sie beispielsweise aus den Firmenschriften von BASF Coatings AG, »Pulverlacke, für industrielle Anwendungen«, Januar 2000, oder »Coatings Partner, Pulverlack Spezial«, 1/2000, oder Römpp Lexikon Lacke und Druckfarben, Georg Thieme Verlag, Stuttgart, New York, 1998, Seiten 187 und 188, »Elektrostatisches Pulversprühen«, »Elektrostatisches Sprühen« und »Elektrostatisches Wirbelbadverfahren«, bekannt sind.

Als Substrate kommen all die in Betracht, deren Oberfläche durch die Anwendung von Hitze und/oder aktinischer Strahlung bei der Härtung der hierauf befindlichen Schichten nicht geschädigt wird. Vorzugsweise bestehen die Substrate aus Metallen, Kunststoffen, Holz, Keramik, Stein, Textil, Faserverbunden, Leder, Glas, Glasfasern, Glas- und Steinwolle, mineral- und harzgebundene Baustoffen, wie Gips- und Zementplatten oder Dachziegel, sowie Verbunden dieser Materialien.

Demnach sind die erfindungsgemäßen Beschichtungsstoffe, Klebstoffe und Dichtungsmassen hervorragend für die Beschichtung, das Verkleben und das Abdichten von Kraftfahrzeugkarosserien und Teilen hiervon, Kraftfahrzeugen im Innen- und Außenbereich, Bauwerken im Innen- und Außenbereich, Türen, Fenstern und Möbeln sowie im Rahmen der industriellen Lackierung für die Beschichtung, das Verkleben und das Abdichten von Kleinteilen, wie Muttern, Schrauben, Randkappen oder Felgen, von Coils, Container, Emballagen, elektrotechnischen Bauteilen, wie Motorwicklungen oder Transformatorwicklungen, und von weißer Ware, wie Haushaltsgeräte, Heizkessel und Radiatoren, geeignet

Im Falle elektrisch leitfähige Substrate können Grundierungen verwendet werden, die in üblicher und bekannter Weise aus Elektrotauchlacken hergestellt werden. Hierfür kommen sowohl anodische als auch kathodische Elektrotauchlacke, insbesondere aber kathodische Elektrotauchlacke, in Betracht Im Falle von nichtfunktionalisierten und/oder unpolaren Kunststoffoberflächen können diese vor der Beschichtung in bekannter Weise einer Vorbehandlung, wie mit einem Plasma oder mit Beflammen, unterzogen oder mit einer Hydrogrundierung versehen werden.

Auch die Härtung der applizierten erfindungsgemäßen Pulverslurries und Pulverlacken weist keine methodischen Besonderheiten auf, sondern erfolgt nach den üblichen und bekannten thermischen Methoden, wie Erhitzen in einem Umluftofen oder Bestrahlen mit IR-Lampen. Für die Härtung mit aktinischer Strahlung kommen Strahlenquellen wie Quecksilberhoch- oder -niederdruckdampflampen, welche gegebenenfalls mit Blei dotiert sind, um ein Strahlenfenster bis zu 405 nm zu öffnen, oder Elektronenstrahlquellen in Betracht Weitere Beispiele geeigneter Verfahren und Vorrichtungen zur Härtung mit aktinischer Strahlung werden in der deutschen Patentanmeldung DE 198 18 735 A1, Spalte 10, Zeilen 31 bis 61, beschrieben.

Die resultierenden erfindungsgemäßen Beschichtungen, insbesondere die erfindungsgemäßen ein- oder mehrschichtigen farb- und/oder effektgebenden Lackierungen, Kombinationseffektschichten und Klarlackierungen sind einfach herzustellen und weisen hervorragende optische Eigenschaften und eine sehr hohe Licht-, Chemikalien-, Wasser-, Schwitzwasser- und Witterungsbeständigkeit auf. Insbesondere sind sie frei von Trübungen und Inhomogenitäten. Sie sind hart, flexibel und kratzfest. Sie weisen einen sehr gutes Reflow-Verhalten und eine hervorragende Zwischenschichthaftung und eine gute bis sehr gute Haftung zu üblichen und bekannten Autoreparaturlackierungen auf.

Die erfindungsgemäßen Klebschichten verbinden die unterschiedlichsten Substrate auf Dauer haftfest miteinander und haben eine hohe chemische und mechanische Stabilität auch bei extremen Temperaturen und/oder Temperaturenschwankungen.

Desgleichen dichten die erfindungsgemäßen Dichtungen die Substrate auf Dauer ab, wobei sie eine hohe chemische und mechanische Stabilität auch bei extremen Temperaturen und/oder Temperaturschwankungen sogar i. V. m. der Einwirkung aggressiver Chemikalien aufweisen.

Ein weiterer Vorteil der Dual-Cure-Beschichtungsstoffe, -Klebstoffe und - Dichtungsmassen ist, daß sie auch in den Schattenzonen komplex geformter dreidimensionaler Substrate, wie Karosserien, Radiatoren oder elektrische Wickelgüter, auch ohne optimale, insbesondere vollständige, Ausleuchtung der Schattenzonen mit aktinischer Strahlung Beschichtungen, Klebschichten und Dichtungen liefern, deren anwendungstechnisches Eigenschaftsprofil an das der Beschichtungen, Klebschichten und Dichtungen außerhalb der Schattenzonen zumindest heranreicht Dadurch werden die in den Schattenzonen befindlichen Beschichtungen, Klebschichten und Dichtungen auch nicht mehr leicht durch mechanische und/oder chemische Einwirkung geschädigt, wie sie beispielsweise beim Einbau weiterer Bauteile von Kraftfahrzeugen in die beschichteten Karosserien eintreten kann.

Demzufolge weisen die auf den vorstehend aufgeführten technologischen Gebieten üblicherweise angewandten grundierten oder ungrundierten Substrate, die mit mindestens einer erfindungsgemäßen Beschichtung beschichtet, mit mindestens einer erfindungsgemäßen Klebschicht verklebt und/oder mit mindestens einer erfindungsgemäßen Dichtung abgedichtet sind, bei einem besonders vorteilhaften anwendungstechnischen Eigenschaftsprofil eine besonders lange Gebrauchsdauer auf, was sie wirtschaftlich besonders attraktiv macht

### Beispiele

### Herstellbeispiel 1

### Die Herstellung eines erfindungsgemäß zu verwendenden Emulgators

In einem geeigneten Reaktionsgefäß, ausgerüstet mit drei Zulaufgefäßen, Rührer, Rückflußkühler und Ölheizung, wurden 52,56 Gewichtsteile deionisiertes Wasser vorgelegt und auf 90 °Celsius erhitzt. Anschließend wurden bei dieser Temperatur drei separate Zuläufe parallel und gleichmäßig zur Vorlage hinzudosiert. Der erste Zulauf bestand aus 10,18 Gewichtstellen Acrylsäure, 18,35 Gewichtsteilen Methylmethacrylat und 1,49 Gewichtsteilen Diphenylethylen. Der zweite Zulauf bestand aus 9,9 Gewichtsteilen einer 25 Gew.-% igen Ammoniaklösung in Wasser. Der dritte Zulauf bestand aus einer Lösung von 2,25 Gewichtsteilen Ammoniumperoxodisulfat in 5,25 Gewichtsteilen deionisiertem Wasser. Der erste und der zweite Zulauf wurden während einer Stunde zudosiert Der dritte Zulauf wurde während 1,25 Stunden zudosiert. Nach der Beendigung der Zugabe wurde während vier Stunden nachpolymerisiert. Dabei wurde die Temperatur der Reaktionsmischung langsam abgesenkt Es resultierte eine Dispersion des erfindungsgemäß zu verwendenden Emulgators mit einem Festkörpergehalt von 33 Gew.-%. Die wäßrige Lösung des Emulgators wies bei der kritischen Micellbildungskonzentration eine Oberflächespannung von 50 mN/m auf.

### Herstellbeispiel 2

### Die Herstellung eines hydroxyfunktionellen Polyacrylatharzes

In einem geeigneten Reaktionsgefäß wurden 40 Gewichtsteile Xylol vorgelegt und auf 130 °C erwärmt Zu dieser Vorlage wurden bei 130 °C während 4 Stunden über zwei getrennte Zuläufe zum einen eine Initiatorlösung aus 10 Gewichtsteilen tert.-Butylperethylhexanoat und 10 Gewichtsteilen Xylol und zum anderen eine Monomerenmischung aus 25 Gewichtsteilen Styrol, 21 Gewichtsteilen n-Butylmethacrylat, 26 Gewichtsteilen Methylmethacrylat und 28 Gewichtsteilen 2-Hydroxypropylmethacrylat gleichmäßig unter Rühren zudosiert. Die resultierende Reaktionsmischung wurde auf 160 °C erhitzt, und das Lösemittel wurde bei 100 mbar vollständig abdestilliert. Die resultierende heiße Schmelze des Bindemittels wurde aus dem Reaktionsgefäß abgelassen. Nach dem Abkühlen auf Raumtemperatur erhielt man einen farblosen Feststoff.

### Beispiel 1

### Die Herstellung einer erfindungsgemäßen Pulverslurry

In einem ersten Behälter wurde ein handelsübliches, mit 3,5-Dimethylpyrazol blockiertes Polyisocyanat auf der Basis von Isophorondiisocyanat mit einem NCO-Gehalt von 15,5 Gew.-% vorgelegt.

In einem zweiten Behälter wurden 56,07 Gewichtsteile des Bindemittels gemäß dem Herstellbeispiel 2, 2 Gewichtsteile eines handelsüblichen UV-Absorbers (Tinuvin® 1130 der Firma Ciba Additive GmbH), 0,9 Gewichtsteile eines handelsüblichen HALS (Tinuvin® 144 der Firma Ciba Additive GmbH), 0,4 Gewichtsteile eines handelsüblichen Verlaufsmittels (Additol® XL 490), 0,4 Gewichtsteile Benzoin und 0,5 Gewichtsteile Dibutylzinnoxid vorgelegt.

Der Inhalt der beiden Behälter wurde auf 139 °C erwärmt Bei dieser Temperatur resultieren Schmelzen, deren Viskosität von 10 mPas eine weitere Bearbeitung, insbesondere eine Förderung, erlaubt.

Vor der Förderung der Schmelzen durch die Anlage mit einem Zahnkranz-Dispergieraggregat ("K-Generator" der Firma Kinematica AG, Luzern, Schweiz) wurde die gesamte Anlage mit Dampf auf 139 °C erwärmt.

Hiernach wurden die beiden Schmelzen über getrennte, beheizte Zuleitungen mit volumetrisch fördernden Pumpen in einem statischen Sulzer-Mischer dosiert. Über den Volumenstrom der Pumpen wurde ein stöchiometrisches Verhältnis von blockierten lsocyanatgruppen zu Hydroxylgruppen eingestellt In dem statischen Mischer wurden die beiden Schmelzen innerhalb sehr kurzer Zeit (< 5,0 s) molekulardispers gemischt. Die resultierende homogene Schmelze, die noch immer eine Temperatur oberhalb des Schmelzpunkts der Bestandteile aufwies, wurde über ein Injektorrohr in die Voremulgierzone des Zahnkranz-Dispergieraggregats gefördert.

In der Voremulgierzone wurde eine wäßrige Lösung, bestehend aus 61 Gewichtsteilen deionisiertem Wasser, 5 Gewichtsteilen der Emulgatordispersion gemäß Herstellbeispiel 1, 0,2 Gewichtsteile eines handelsüblichen Entschäumers (Troykyd® der Firma Troy Chemie GmbH) und 0,4 Gewichtsteile eines handelsüblichen Netzmittels (Surfinol® TMN 6 der Firma Air Products & Chemicals) mit einer volumetrisch fördernden Pumpe zudosiert. Die wäßrige Lösung war vor der Dosierung in einem druckbeständigen Behälter auf die Prozeßtemperatur erwärmt worden.

Durch Energieeintrag mit einem ersten Rotor-Stator-System des Zahnkranz-Dispergieraggregats wurde eine Voremulsion erzeugt, in der die wäßrige Lösung die kontinuierliche Phase bildete. Die Voremulsion wurde in einer weiteren Zone des Zahnkranz-Dispergieraggregats bei einem Energieeintrag zwischen 10⁷ und 10⁸ J/m³ auf eine mittlere Teilchengröße zwischen 1 und 3 µm zerkleinert. Der Energieeintrag des Rotor-Stator-Systems wurde über die Spaltbreite des Arbeitsspalts zwischen Rotor und Stator, durch die Geometrie der Zähne des jeweiligen Rotors und Stators sowie die Drehzahl eingestellt Nach der Dispergierung wurde die Emulsion durch Einspritzen von kaltem deionisiertem Wasser rasch abgekühlt. Insgesamt sind die Mengen an deionisiertem Wasser zur Voremulgierung und zur Abkühlung so bemessen, daß die resultierende Suspension einen Festkörpergehalt von 35 Gew.-%, bezogen auf die Suspension, aufwies.

Die Suspension wurde noch mit 1,8 Gewichtsteilen eines handelsüblichen Verdickers (Aaysol® RM8 der Firma Rohm & Haas) versetzt und durch einen 50 µm Filter filtriert.

Die erfindungsgemäße Pulverslurry war absetzstabil. Sie wies hervorragende Transport- und Applikationseigenschaften auf.

### Beispiel 2

### Die Herstellung einer erfindungsgemäßen Mehrschichtlackierung

Für die Herstellung der erfindungsgemäßen Mehrschichtlackierung wurden in üblicher und bekannter Weise Prüftafeln der Abmessungen 10 cm x 20 cm hergestellt. Hierzu wurden Stahltafeln (Karosseriebleche), die mit einer üblichen und bekannten kathodisch abgeschiedenen und eingebrannten Elektrotauchlackierung (KTL) beschichtet waren, mit einem handelsüblichen Dünnschichtfüller (Ecoprime® der Firma BASF Coatings AG) beschichtet, wonach die resultierende Füllerschicht während fünf Minuten bei 20 °C und einer relativen Luftfeuchtigkeit von 65% abgelüftet und in einem Umluftofen während fünf Minuten bei 80 °C getrocknet wurde. Hiernach wiesen die Füllerschichten eine Trockenschichtdicke von 15µm auf.

Nach dem Abkühlen der Prüftafeln auf 20 °C wurde ein handelsüblicher Wasserbasislack (Ecostar® der Firma BASF Coatings AG) appliziert, während fünf Minuten bei 20 °C und einer relativen Luftfeuchtigkeit von 65% abgelüftet und in einem Umluftofen während fünf Minuten bei 80 °C getrocknet, so daß die getrockneten Basislackschichten eine Trockenschichtdicke von etwa 15 µm aufwiesen.

Nach dem erneuten Abkühlen der Prüftafeln auf 20 °C wurden die Basislackschichten mit der erfindungsgemäßen Pulverslurry gemäß dem Beispiel 1 überschichtet Die resultierende Pulverslurry-Klarlackschichten wurden während 3 Minuten bei 20 °C und einer relativen Luftfeuchtigkeit von 65% abgelüftet und in einem Umluftofen während 5 Minuten bei 60 °C getrocknet

Nach der Applikation aller drei Schichten wurden sie gemeinsam während 30 Minuten bei 155 °C eingebrannt, wodurch die erfindungsgemäße Mehrschichlackierung resultierte. Ihre Klarlackierung wies eine Schichtdicke von 40 µm auf. Sie war hoch glänzend, flexibel, hart und kratzfest und von einer hervorragenden Lösemittelbeständigkeit (mehr als 100 Doppelhübe im Methylethylketon-Test ohne Beschädigung) und einer guten Schwitzwasserbeständigkeit Die Zwischenschichthaftung war sehr gut

### Beispiel 3

### Die Herstellung einer weiteren erfindungsgemäßen Pulverslurry

Drei beheizbare Schmelzebehälter wurden über Dosierpumpen mit einem statischen Sulzer-Mischer (Leervolumen: 0,0463 Liter) verbunden. Der Austritt des Mischers war mit einem Zahnkranz-Dispergieraggregat ("K-Generator" der Firma Kinematica AG, Luzem, Schweiz) verbunden, in das parallel zur dispersen Phase (die Mischung der drei Schmelzen) eine kontinuierliche wäßrige Phase zudosiert wurde.

Der erste Schmelzebehälter enthielt eine Mischung aus
- 95,1 Gew.-% eines epoxidgruppenhaltigen Polyacrylatharzes mit einem Epoxidäquivalentgewicht von 550 g/Mol,
- 2,5 Gew.-% Tinuvin ® CGL 1545 (handelsüblicher UV- Absorber der Firma Ciba Specialty Chemicals),
- 1,3 Gew.-% Tinuvin ® 123 (handelsüblicher reversibler Radikalfänger, HALS, der Firma Ciba Specialty Chemicals),
- 0,3 Gew.-% Irgafos ® P-EPQ (handelsübliches Antioxidans der Firma Ciba Specialty Chemicals).
- 0,8 Gew.-% Troy® EX 542 (handelsübliches benzoinhaltiges Entgasungsmittel der Firma Troy, USA).

Die Schmelze wurde bei einer Temperatur von 152 °C mit einem Massenstrom von 34 kg/h in den Mischer gepumpt Ihr Anteil an der dispersen Phase lag bei 73,6 Gew.-%.

Der zweite Schmelzebehälter enthielt Dodecandisäure. Diese wurde einer Temperatur von 154 °C mit einem Massenstrom von 7,2 kg/h in den Mischer gepumpt Ihr Anteil an der dispersen Phase lag bei 16,2 Gew.-%.

Der dritte Schmelzebehälter enthielt das in Beispiel 1 verwendete blockierte Polyisocyanat Es wurde bei einer Temperatur von 134 °C mit einem Massenstrom von 5,0 kg/h in den Mischer gepumpt Sein Anteil an der dispersen Phase lag bei 10,8 Gew.-%.

Nach einer Verweilzeit von 3,5 s gelangte die Schmelze in die Kammer des Zahnkranz-Dispergieraggregats (vgl. Beispiel 1).

Parallel zur Zudosierung der Schmelzen wurde aus einem weiteren Dosierbehälter die kontinuierliche wäßrige Phase aus 95 Gew.-% deionisiertem Wasser und 5,0 Gew.-% der Emulgatordispersion des Herstellbeispiels 1 mit einem Massenstrom von 77,5 kg/h zudosiert.

Die Drehzahl des Zahnkranz-Dispergieraggregats betrug 9.000 U/min.

Die resultierende Emulsion wurde nach dem Verlassen des Zahnkranz-Dispergieraggregats mit einem Rohrkühler rasch abgekühlt Die resultierende Suspension wies eine z-mittlere Teilchengröße von 12,9 µm (gemessen mit dem Laserbeugungsgerät der Firma Malvem) auf.

Die erfindungsgemäße Pulverslurry war völlig absetzstabil und wies hervorragende Transport- und Applikationseigenschaften auf. Außerdem war sie hervorragend für die Herstellung von Pulverlacken geeignet

### Beispiel 4

### Die Herstellung eines erfindungsgemäßen Pulverlacks

Die erfindungsgemäße Pulverslurry gemäß Beispiel 3 wurde in einem Sprühturm derart versprüht, daß die Temperatur der Partikel nicht über 40 °C stieg. Die Temperatur des Trocknungsluftstroms lag bei 110 °C. Der Wassergehalt des erfindungsgemäßen Pulverlacks lag unter 0,5 Gew.-%. Seine mittlere Teilchengröße betrug 25 µm.

Der erfindungsgemäße Pulverlack war lager- und transportstabil und neigte nicht zum Verbacken. Seine Fluidität und seine Applikationseigenschaften waren hervorragend. Er lieferte glatte, hoch glänzende, kratzfeste, flexible, harte und chemikalienbeständige Klarlackierungen mit hervorragenden Haftungseigenschaften.

## Patentansprüche

1. Pulverlacksuspensionen (Pulverslurries) und Pulverlacke, wobei die Pulverslurries herstellbar sind, indem man
(1) mindestens eine flüssige Komponente, enthaltend mindestens ein flüssiges Ausgangsprodukt, in einem wässrigen Medium emulgiert, wodurch eine wässrige Emulsion flüssiger Partikel resultiert,
(2) die Emulsion abkühlen lässt, so dass sich eine Suspension dimensionsstabiler Partikel bildet,
und wobei die Pulverlacke herstellbar sind, indem man
(1) mindestens eine flüssige Komponente, enthaltend mindestens ein flüssiges Ausgangsprodukt, in einem wässrigen Medium emulgiert, wodurch eine wässrige Emulsion flüssiger Partikel resultiert,
(2) die Emulsion abkühlen lässt, so dass sich eine Suspension dimensionsstabiler Partikel bildet, wonach man
(3) die dimensionsstabilen Partikel isoliert,
**dadurch gekennzeichnet, dass** man hierbei mindestens einen Emulgator verwendet, dessen wässrige Lösung bei der kritischen Micellbildungskonzentration (KMK) eine Oberflächenspannung >30 mN/m hat.

2. Pulverlacksuspensionen (Pulverslurries) und Pulverlacke nach Anspruch 1, **dadurch gekennzeichnet, dass** der Emulgator aus der Gruppe der Copolymerisate, herstellbar durch ein- oder mehrstufige radikalische Copolymerisation in einem wässrigen Medium von
(a) mindestens einem olefinisch ungesättigten Monomer und
(b) mindestens einen vom olefinisch ungesättigten Monomer (a) verschieden olefinisch ungesättigten Monomer der allgemeinen Formel 1
**R¹R²C=CR³R⁴** (I),
worin die Reste R¹, R², R³ und R⁴ jeweils unabhängig voneinander für Wasserstoffatome oder substituierte oder unsubstituierte Alkyl-, Cycloalkyl-, Alkylcycloalkyl-, Cycloalkylalkyl-, Aryl-, Alkylaryl-, Cycloalkylaryl-, Arylalkyl- oder Arycycloalkylreste stehen, mit der Maßgabe, dass mindestens zwei der Variablen R¹, R², R³ und R⁴ für substituierte oder unsubstituierte Aryl-, Arylalkyl- oder Arylcycloalkylreste, insbesondere substituierte oder unsubstituierte Arylreste, stehen;
ausgewählt wird.

3. Pulverlacksuspensionen (Pulverslurries) und Pulverlacke nach Anspruch 2, **dadurch gekennzeichnet, dass** es sich bei den Arylresten R¹, R², R³ und/oder R⁴ der Monomeren (b) um Phenyl- oder Naphthylreste handelt.

4. Pulverlacksuspensionen (Pulverslurries) und Pulverlacke nach Anspruch 2 oder 3., **dadurch gekennzeichnet, dass** es sich um Phenylreste handelt.

5. Pulverlacksuspensionen (Pulverslurries) und Pulverlacke nach einem der Ansprüche 2 bis 4, **dadurch gekennzeichnet, dass** die Substituenten in den Resten R¹, R², R³ und/oder R⁴ der Monomeren (b) aus der Gruppe, bestehend aus elektronenziehenden oder elektronenschiebenden Atomen oder organischen Resten, ausgewählt werden.

6. Pulverlacksuspensionen (Pulverslurries) und Pulverlacke nach Anspruch 5, **dadurch gekennzeichnet, dass** die Substituenten aus der Gruppe, bestehend aus Halogenatomen, Nitril-, Nitro-, partiell oder vollständig halogenierten Alkyl-, Cycloalkyl-, Alkylcycloalkyl-, Cycloalkylalkyl-, Aryl-, Alkylaryl-, Cycloalkylaryl-, Arylalkyl- und Arylcycloalkylreste; Aryloxy-, Alkyloxy- und Cycloalkyloxyresten; Arylthio-, Alkylthio- und Cycloalkylthioresten und primären, sekundären und/oder teritären Aminogruppen, ausgewählt werden.

7. Pulverlacksuspensionen (Pulverslurries) und Pulverlacke nach einem der Ansprüche 2 bis 6, **dadurch gekennzeichnet, dass** mindestens ein Monomer (a) aus der Gruppe der carboxylgruppenhaltigen Monomeren (a3) ausgewählt wird.

8. Pulverlacksuspensionen (Pulverslurries) und Pulverlacke nach einem der Ansprüche 1 bis 7, **dadurch gekennzeichnet, dass** mindestens zwei schmelzbare feste Ausgangsprodukte in geschmolzenem Zustand in einem statischen Mischer vermischbar sind.

9. Pulverlacksuspensionen (Pulverslurries) und Pulverlacke nach einem der Ansprüche 1 bis 8, **dadurch gekennzeichnet, dass** die flüssige(n) Komponente(n) in einem Zahnkranz-Dispergieraggregat mit dem wässrigen Medium emulgierbar ist oder sind.

10. Pulverlacksuspensionen (Pulverslurries) und Pulverlacke nach Anspruch 9, **dadurch gekennzeichnet, dass** das Zahnkranz-Dispergieraggregat mindestens eine zylindrische Anordnung mindestens zweier auf Haltern sitzender, sich umschließender, relativ zueinander gegenläufig rotierbarer Zerkleinerungsorgankränze (Stator und Rotor) aufweist, wobei der sich durch die Relativbewegung zwischen dem Stator und Rotor ergebende Arbeitspalt Wände aufweist, die nicht-parallel zueinander verlaufen.

11. Pulverlacksuspensionen (Pulverslurries) und Pulverlacke nach einem der Ansprüche 1 bis 10, **dadurch gekennzeichnet, dass** der Emulgator in dem wässrigen Medium enthalten ist.

12. Pulverlacksuspensionen (Pulverslurries) und Pulverlacke nach einem der Ansprüche 1 bis 11, **dadurch gekennzeichnet, dass** sie physikalisch oder thermisch und/oder mit aktinischer Strahlung härtbar sind.

13. Pulverlacksuspensionen (Pulverslurries) und Pulverlacke nach einem der Ansprüche 1 bis 12, **dadurch gekennzeichnet, dass** sie Einkomponentensysteme sind.

14. Pulverlacke nach einem der Ansprüche 1 bis 13, **dadurch gekennzeichnet, dass** die dimensionsstabilen Partikel durch Sprühtrocknung oder Gefriertrocknung herstellbar sind.

15. Verfahren zur Herstellung von Pulverlacksuspensionen (Pulverslurries) und Pulverlacken gemäß einem der Ansprüche 1 bis 13 und von Pulverlacken gemäß einem der Ansprüche 1 bis 14 durch Emulgierung, wobei die Pulverslurries hergestellt werden, indem man
(1) mindestens eine flüssige Komponente, enthaltend mindestens ein flüssiges Ausgangsprodukt, in einem wässrigen Medium emulgiert, wodurch eine wässrige Emulsion flüssiger Partikel resultiert,
(2) die Emulsion abkühlen lässt, so dass sich eine Suspension dimensionsstabiler Partikel bildet,
und wobei die Pulverlacke hergestellt werden, indem man
(1) mindestens eine flüssige Komponente, enthaltend mindestens ein flüssiges Ausgangsprodukt, in einem wässrigen Medium emulgiert, wodurch eine wässrige Emulsion flüssiger Partikel resultiert,
(2) die Emulsion abkühlen lässt, so dass sich eine Suspension dimensionsstabiler Partikel bildet, wonach man
(3) die dimensionsstabilen Partikel isoliert,
**dadurch gekennzeichnet, dass** man hierbei mindestens einen Emulgator verwendet, dessen wässrige Lösung bei der kritischen Micellbildungskonzentration (KMK) Oberflächenspannung >30 mN/m hat.

16. Verwendung der Pulverlacksuspensionen (Pulverslurries) und Pulverlacke gemäß einem der Ansprüche 1 bis 14 als Beschichtungsstoffe, Klebstoffe und Dichtungsmassen oder zur Herstellung von Beschichtungsstoffen, Klebstoffen und Dichtungsmassen.

17. Verwendung nach Anspruch 16, **dadurch gekennzeichnet, dass** die Beschichtungsstoffe, Klebstoffe oder Dichtungsmassen für das Lackieren, Verkleben und Abdichten von Kraftfahrzeugkarosserien und Teile hiervon, Kraftfahrzeugen im Innen- und Außenbereich, Bauwerken im Innen- und Außenbereich, Türen, Fenstern und Möbeln sowie für das Lackieren, Verkleben und Abdichten im Rahmen der industriellen Lackierung von Kleinteilen, Coils, Container, Emballagen, elektronischen Bauteilen und weißer Ware verwendet werden.

## Claims

1. Powder coating suspensions (powder slurries) and powder coating materials, the powder slurries being preparable by
(1) emulsifying at least one liquid component comprising at least one liquid starting product in an aqueous medium to give an aqueous emulsion of liquid particles and
(2) cooling the emulsion so that a suspension of dimensionally stable particles is formed
and the powder coating materials being preparable by
(1) emulsifying at least one liquid component comprising at least one liquid starting product in an aqueous medium to give an aqueous emulsion of liquid particles and
(2) cooling the emulsion so that a suspension of dimensionally stable particles is formed, and then
(3) isolating the dimensionally stable particles, **characterized in that** these procedures are carried out using at least one emulsifier whose aqueous solution at the critical micelle concentration (CMC) has a surface tension > 30 mN/m.

2. Powder coating suspensions (powder slurries) and powder coating materials according to Claim 1, **characterized in that** the emulsifier is selected from the group consisting of copolymers preparable by single-stage or multistage, free-radical copolymerization in an aqueous medium of
a) at least one olefinically unsaturated monomer and
b) at least one olefinically unsaturated monomer different than the olefinically unsaturated monomer (a) and of the general formula I
**R¹R²C=CR³R⁴** (I)
in which the radicals R¹, R², R³, and R⁴ each independently of one another are hydrogen atoms or substituted or unsubstituted alkyl, cycloalkyl, alkylcycloalkyl, cycloalkylalkyl, aryl, alkylaryl, cycloalkylaryl, arylalkyl or arylcycloalkyl radicals with the proviso that at least two of the variables R¹, R², R³ and R⁴ are substituted or unsubstituted aryl, arylalkyl or arylcycloalkyl radicals, especially substituted or unsubstituted aryl radicals.

3. Powder coating suspensions (powder slurries) and powder coating materials according to Claim 2, **characterized in that** the aryl radicals R¹, R², R³ and/or R⁴ of the monomers (b) are phenyl or naphthyl radicals.

4. Powder coating suspensions (powder slurries) and powder coating materials according to Claim 2 or 3, **characterized in that** the radicals are phenyl radicals.

5. Powder coating suspensions (powder slurries) and powder coating materials according to any of Claims 2 to 4, **characterized in that** the substituents in the radicals R¹, R², R³ and/or R⁴ of the monomers (b) are selected from the group consisting of electron-withdrawing or electron-donating atoms or organic radicals.

6. Powder coating suspensions (powder slurries) and powder coating materials according to Claim 5, **characterized in that** the substituents are selected from the group consisting of halogen atoms, nitrile, nitro, partially or fully halogenated alkyl, cycloalkyl, alkylcycloalkyl, cycloalkylalkyl, aryl, alkylaryl, cycloalkylaryl, arylalkyl, and arylcycloalkyl radicals; aryloxy, alkyloxy, and cycloalkyloxy radicals; arylthio, alkylthio, and cycloalkylthio radicals, and primary, secondary and/or tertiary amino groups.

7. Powder coating suspensions (powder slurries) and powder coating materials according to any of Claims 2 to 6, **characterized in that** at least one monomer (a) is selected from the group of the carboxyl-containing monomers (a3).

8. Powder coating suspensions (powder slurries) and powder coating materials according to any of Claims 1 to 7, **characterized in that** at least two meltable solid starting products are mixable in the melted state in a static mixer.

9. Powder coating suspensions (powder slurries) and powder coating materials according to any of Claims 1 to 8, **characterized in that** the liquid component(s) is (are) emulsifiable with the aqueous medium in a toothed-ring dispersing unit.

10. Powder coating suspensions (powder slurries) and powder coating materials according to Claim 9, wherein the toothed-ring dispersing unit comprises at least one cylindrical arrangement of at least two comminutor rings (stator and rotor) which are seated on holders, are in mutual embrace, and are rotatable in opposite directions relative to one another, the working gap which results from the relative movement between stator and rotor having walls which extend nonparallelwise with respect to one another.

11. Powder coating suspensions (powder slurries) and powder coating materials according to any of Claims 1 to 10, **characterized in that** the emulsifier is present in the aqueous medium.

12. Powder coating suspensions (powder slurries) and powder coating materials according to any of Claims 1 to 11, **characterized in that** they are curable physically or thermally and/or with actinic radiation.

13. Powder coating suspensions (powder slurries) and powder coating materials according to any of Claims 1 to 12, **characterized in that** they are one-component systems.

14. Powder coating materials according to any of Claims 1 to 13, **characterized in that** the dimensionally stable particles are preparable by spray drying or freeze drying.

15. Process for preparing powder coating suspensions (powder slurries) and powder coating materials according to any of Claims 1 to 13 and of powder coating materials according to any of Claims 1 to 14 by emulsification, the powder slurries being prepared by
(1) emulsifying at least one liquid component comprising at least one liquid starting product in an aqueous medium to give an aqueous emulsion of liquid particles and
(2) cooling the emulsion so that a suspension of dimensionally stable particles is formed
and the powder coating materials being prepared by
(1) emulsifying at least one liquid component comprising at least one liquid starting product in an aqueous medium to give an aqueous emulsion of liquid particles and
(2) cooling the emulsion so that a suspension of dimensionally stable particles is formed, and then
(3) isolating the dimensionally stable particles,
**characterized in that** these procedures are carried out using at least one emulsifier whose aqueous solution at the critical micelle concentration (CMC) has a surface tension > 30 mN/m.

16. Use of the powder coating suspensions (powder slurries) and powder coating materials according to any of Claims 1 to 14 as coating materials, adhesives and sealing compounds or to prepare coating materials, adhesives, and sealing compounds.

17. Use according to Claim 16, **characterized in that** the coating materials, adhesives or sealing compounds are used to coat, bond, and seal motor vehicle bodies and parts thereof, the interior and exterior of motor vehicles, the inside and outside of buildings, doors, windows, furniture, and also for coating, bonding, and sealing in the context of the industrial coating of small parts, coils, containers, packaging, electrical components, and white goods.

## Revendications

1. Suspensions de laque en poudre (suspensions de poudre) et laques en poudre, les suspensions de poudre pouvant être préparées
(1) en ce qu'on émulsionne au moins un composant liquide, contenant au moins un produit de départ liquide, dans un milieu aqueux, suite à quoi on obtient une émulsion aqueuse de particules liquides,
(2) en ce qu'on laisse refroidir l'émulsion, de manière telle qu'il se forme une suspension de particules de dimensions stables,
et les laques en poudre pouvant être préparées
(1) en ce qu'on émulsionne au moins un composant liquide, contenant au moins un produit de départ liquide, dans un milieu aqueux, suite à quoi on obtient une émulsion aqueuse de particules liquides,
(2) en ce qu'on laisse refroidir l'émulsion, de manière telle qu'il se forme une suspension de particules de dimensions stables, puis
(3) en ce qu'on isole les particules de dimensions stables,
**caractérisées en ce qu'**on utilise au moins un émulsifiant dont la solution aqueuse présente, à la concentration micellaire critique (CMC), une tension superficielle > 30 mN/m.

2. Suspensions de laque en poudre (suspensions de poudre) et laques en poudre selon la revendication 1, **caractérisées en ce que** l'émulsifiant est choisi dans le groupe formé par les copolymères, pouvant être préparés par une copolymérisation radicalaire en une ou plusieurs étapes dans un milieu aqueux
(a) d'au moins un monomère oléfiniquement insaturé et
(b) d'au moins un monomère oléfiniquement insaturé, différent du monomère (a) oléfiniquement insaturé, de formule générale I
R¹R²C=CR³R⁴ (I),
dans laquelle les radicaux R¹, R², R³ et R⁴ représentent, à chaque fois indépendamment l'un de l'autre, des atomes d'hydrogène ou des radicaux alkyle, cycloalkyle, alkylcycloalkyle, cycloalkylalkyle, aryle, alkylaryle, cycloalkylaryle, arylalkyle ou arylcycloalkyle, substitués ou non substitués, à condition qu'au moins deux des variables R¹, R², R³ et R⁴ représentent des radicaux aryle, arylalkyle ou arylcycloalkyle, substitués ou non substitués, en particulier des radicaux aryle substitués ou non substitués.

3. Suspensions de laque en poudre (suspensions de poudre) et laques en poudre selon la revendication 2, **caractérisées en ce qu'**il s'agit, pour les radicaux aryle R¹, R², R³ et/ou R⁴ des monomères (b), de radicaux phényle ou naphtyle.

4. Suspensions de laque en poudre (suspensions de poudre) et laques en poudre selon la revendication 2 ou 3, **caractérisées en ce qu'**il s'agit de radicaux phényle.

5. Suspensions de laque en poudre (suspensions de poudre) et laques en poudre selon l'une quelconque des revendications 2 à 4, **caractérisées en ce que** les substituants dans les radicaux R¹, R², R³ et/ou R⁴ des monomères (b) sont choisis dans le groupe constitué par les atomes ou les radicaux organiques attracteurs d'électrons ou déplaçant les électrons.

6. Suspensions de laque en poudre (suspensions de poudre) et laques en poudre selon la revendication 5, **caractérisées en ce que** les substituants sont choisis dans le groupe constitué par les atomes d'halogène, les radicaux nitrile, nitro, les radicaux alkyle, cycloalkyle, alkylcycloalkyle, cycloalkylalkyle, aryle, alkylaryle, cycloalkylaryle, arylalkyle et arylcycloalkyle partiellement ou totalement halogénés ; les radicaux aryloxy, alkyloxy et cycloalkyloxy ; les radicaux arylthio, alkylthio et cycloalkylthio et les radicaux amino primaire, secondaire et/ou tertiaire.

7. Suspensions de laque en poudre (suspensions de poudre) et laques en poudre selon l'une quelconque des revendications 2 à 6, **caractérisées en ce qu'**au moins un monomère (a) est choisi dans le groupe des monomères contenant des groupes carboxy (a3).

8. Suspensions de laque en poudre (suspensions de poudre) et laques en poudre selon l'une quelconque des revendications 1 à 7, **caractérisées en ce qu'**au moins deux produits de départ, solides, fusibles, peuvent être mélangés à l'état fondu dans un mélangeur statique.

9. Suspensions de laque en poudre (suspensions de poudre) et laques en poudre selon l'une quelconque des revendications 1 à 8, **caractérisées en ce que** le(s) composant(s) liquide(s) est/sont émulsionnable(s) dans un appareil de dispersion à couronne dentée avec le milieu aqueux.

10. Suspensions de laque en poudre (suspensions de poudre) et laques en poudre selon la revendication 9, **caractérisées en ce que** l'appareil de dispersion à couronne dentée présente au moins une disposition cylindrique d'au moins deux couronnes à organe de broyage placées sur des dispositifs de fixation, s'entourant l'une l'autre, pouvant tourner dans un sens opposé l'une par rapport à l'autre (stator et rotor), la fente de travail obtenue par le mouvement relatif entre le stator et le rotor présentant des parois qui ne sont pas parallèles l'une à l'autre.

11. Suspensions de laque en poudre (suspensions de poudre) et laques en poudre selon l'une quelconque des revendications 1 à 10, **caractérisées en ce que** l'émulsifiant est contenu dans le milieu aqueux.

12. Suspensions de laque en poudre (suspensions de poudre) et laques en poudre selon l'une quelconque des revendications 1 à 11, **caractérisées en ce qu'**elles sont durcissables physiquement ou thermiquement et/ou par un rayonnement actinique.

13. Suspensions de laque en poudre (suspensions de poudre) et laques en poudre selon l'une quelconque des revendications 1 à 12, **caractérisées en ce qu'**il s'agit de systèmes à un composant.

14. Laques en poudre selon l'une quelconque des revendications 1 à 13, **caractérisées en ce que** les particules à dimensions stables peuvent être produites par séchage par pulvérisation ou lyophilisation.

15. Procédé pour la préparation de suspensions de laque en poudre (suspensions de poudre) et de laques en poudre selon l'une quelconque des revendications 1 à 13 et de laques en poudre selon l'une quelconque des revendications 1 à 14 par émulsion, les suspensions de poudre étant préparées
(1) en ce qu'on émulsionne au moins un composant liquide, contenant au moins un produit de départ liquide, dans un milieu aqueux, suite à quoi on obtient une émulsion aqueuse de particules liquides,
(2) en ce qu'on laisse refroidir l'émulsion, de manière telle qu'il se forme une suspension de particules de dimensions stables,
et les laques en poudre étant préparées
(1) en ce qu'on émulsionne au moins un composant liquide, contenant au moins un produit de départ liquide, dans un milieu aqueux, suite à quoi on obtient une émulsion aqueuse de particules liquides,
(2) en ce qu'on laisse refroidir l'émulsion, de manière telle qu'il se forme une suspension de particules de dimensions stables, puis
(3) en ce qu'on isole les particules de dimensions stables,
**caractérisé en ce qu'**on utilise au moins un émulsifiant dont la solution aqueuse présente, à la concentration micellaire critique (CMC), une tension superficielle > 30 mN/m.

16. Utilisation des suspensions de laque en poudre (suspensions de poudre) et des laques en poudre selon l'une quelconque des revendications 1 à 14 comme substances de revêtement, adhésifs et masses d'étanchéité ou pour la production de substances de revêtement, d'adhésifs et de masses d'étanchéité.

17. Utilisation selon la revendication 16, **caractérisée en ce que** les substances de revêtement, les adhésifs ou les masses d'étanchéité sont utilisés pour le laquage, le collage et l'étanchéité de carrosseries de véhicules et de parties de celles-ci, de véhicules, à l'intérieur et à l'extérieur, de constructions, à l'intérieur et à l'extérieur, de portes, de fenêtres et de meubles ainsi que pour le laquage, le collage et l'étanchéité dans le cadre du laquage industriel de petites pièces, de bobines, de conteneurs, d'emballages, de pièces électroniques et de gros appareils électroménagers.
